(19)

**Europäisches Patentamt**
**European Patent Office**
**Office européen des brevets**

(11) **EP 4 460 711 B1**

(12) **EUROPEAN PATENT SPECIFICATION**

(45) Date of publication and mention
of the grant of the patent:
**14.05.2025 Bulletin 2025/20**

(21) Application number: **23853589.2**

(22) Date of filing: **27.12.2023**

(51) International Patent Classification (IPC):
$G01S\ 7/00^{(2006.01)}$    $G01S\ 7/4913^{(2020.01)}$
$G01S\ 7/4915^{(2020.01)}$    $G01S\ 7/493^{(2006.01)}$
$G01S\ 7/497^{(2006.01)}$    $G01S\ 17/34^{(2020.01)}$
$G01S\ 7/4912^{(2020.01)}$

(52) Cooperative Patent Classification (CPC):
**G01S 17/34; G01S 7/4913; G01S 7/4915;**
**G01S 7/4917; G01S 7/493; G01S 7/497;**
G01S 7/003; G01S 17/931

(86) International application number:
**PCT/JP2023/047371**

(87) International publication number:
**WO 2024/202374 (03.10.2024 Gazette 2024/40)**

(54) **FREQUENCY ESTIMATION SYSTEMS AND METHODS FOR COHERENT RANGE ESTIMATION**

FREQUENZSCHÄTZUNGSSYSTEME UND VERFAHREN ZUR KOHÄRENTEN
BEREICHSSCHÄTZUNG

SYSTÈMES ET PROCÉDÉS D'ESTIMATION DE FRÉQUENCE POUR UNE ESTIMATION DE
PLAGE COHÉRENTE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **28.03.2023 US 202318191815**

(43) Date of publication of application:
**13.11.2024 Bulletin 2024/46**

(73) Proprietor: **MITSUBISHI ELECTRIC**
**CORPORATION**
**Chiyoda-ku**
**Tokyo 100-8310 (JP)**

(72) Inventors:
• **RAPP, Joshua**
**Cambridge, Massachusetts 02139-1955 (US)**
• **ULVOG, Alfred**
**Cambridge, Massachusetts 02139-1955 (US)**
• **MANSOUR, Hassan**
**Cambridge, Massachusetts 02139-1955 (US)**
• **AKINO, Toshiaki**
**Cambridge, Massachusetts 02139-1955 (US)**

• **BOUFOUNOS, Petros**
**Cambridge, Massachusetts 02139-1955 (US)**
• **PARSONS, Kieran**
**Cambridge, Massachusetts 02139-1955 (US)**

(74) Representative: **Pfenning, Meinig & Partner mbB**
**Patent- und Rechtsanwälte**
**Theresienhöhe 11a**
**80339 München (DE)**

(56) References cited:
**CN-A- 113 740 834**

• **CASSIDY S L: "Compensating For Point**
**Response Degradation In A High Resolution**
**FMCW Imaging Radar", 2019 20TH**
**INTERNATIONAL RADAR SYMPOSIUM (IRS),**
**GERMAN INSTITUTE OF NAVIGATION (DGON),**
**26 June 2019 (2019-06-26), pages 1 - 8,**
**XP033578374, DOI: 10.23919/IRS.2019.8768087**

**(Cont. next page)**

• **YANIK MUHAMMET EMIN ET AL: "Development and Demonstration of MIMO-SAR mmWave Imaging Testbeds", IEEE ACCESS, IEEE, USA, vol. 8, 8 July 2020 (2020-07-08), pages 126019 - 126038, XP011799536, DOI: 10.1109/ ACCESS.2020.3007877**

## Description

[Technical Field]

The present disclosure relates generally to object detection in a scene using frequency modulated continuous wave (FMCW) techniques, and more particularly, to FMCW based devices and methods for coherent range estimation of an object in the scene.

[Background Art]

Several application areas such as autonomous vehicles, industrial robotics, navigation, aerospace, meteorological element measurement, atmospheric environment monitoring etc. require precise detection of objects for performing critical functions. Reliable object detection is usually performed using remote sensing techniques such as Light Detection and Ranging (LIDAR) that uses light in the form of a pulsed laser to measure ranges (variable distances) to objects in a scene. Several types of Lidars are available as of today for use in range estimation for such objects in a scene of interest. Conventional pulsed lidars transmit a short pulse of light towards an object, and the distance to the object is calculated from the time that elapses until the reflected light returns to the lidar system. Since pulsed lidar is incoherent, measuring only the intensity of light at the detector, it is susceptible to errors due to ambient light or interference from other lidars.

An alternative approach to distance estimation via laser light is frequency-modulated continuous-wave (FMCW) lidar. Unlike pulsed lidar, FMCW lidar has constant illumination power, which makes it compatible with integrated photonics. FMCW lidar is a coherent ranging technology that measures distance by mixing a local copy of the transmitted laser beam with the light reflected back to the receiver. The beat frequency of the resulting interference signal is proportional to the reflector range, so distance measurement becomes a frequency estimation problem.

Despite such advantages, FMCW lidar's accuracy is often limited by the laser source phase noise. Owing to the underlying oscillations, a laser cannot produce a single pure frequency of light. Instead, thermal changes, mechanical vibration, and even the quantum nature of photons cause randomness in the phase of oscillation, which corresponds to deviations in the emitted frequency. In applications where a noisy laser is used for FMCW lidar, the laser phase noise likewise causes the interference signal to deviate from the true beat frequency. These deviations increase as a function of the range to the object, so that conventionally there is a maximum range (the coherence range) that can be measured without excessive error. This understanding is based on classical frequency estimation techniques, which assume a sinusoid in additive noise, for which the maximum likelihood estimate of the frequency of a sinusoid in additive noise is the peak of the periodogram. However, peak-finding methods perform poorly when phase noise distributes the signal power over a range of frequencies.

Conventional techniques perform frequency estimation in the frequency domain. However, there is a drawback of this approach of conventional methods because phase noise statistics are not well understood in frequency domain. Attempts to decipher phase noise statistics have led to increase in complexity of the measurement system and/or require more hardware and computational resources. Accordingly, better approaches for estimating frequency of beat signals are needed.

The following reference discloses a brief case study which illustrates the role that internal reflections can play in degrading the point response, and hence effective range resolution, of a FMCW radar, using a high-resolution multi-receiver 300 GHz radar as a test case, and a compensation technique is presented which corrects for this effect by calibrating against a reference target, allowing for the bandwidth-limited range resolution to be restored: CASSIDY SL: "Compensating For Point Response Degradation In A High Resolution FMCW Imaging Radar", 2019 20TH INTERNATIONAL RADAR SYMPOSIUM (IRS), GERMAN INSTITUTE OF NAVIGATION (DGON), 26 June 2019 (2019-06-26), pages 1-8, DOI: 10.23919/IRS.2019.8768087.

CN 113 740 834 A provides a difference frequency estimation method of an FMCW radar, which is applied to the technical field of signal processing and comprises the following steps: acquiring a real signal to be processed, and converting the real signal to be processed into an analytic signal; acquiring an actual phase of the analytic signal; carrying out average segmentation on the actual phase in a time domain according to a preset value, carrying out least square phase fitting on each segment to obtain the slope of each segment of fitting straight line, and taking the slope of each segment of fitting straight line as the difference frequency of each segment; and removing the difference frequency of a partial section with large deviation due to phase extraction and noise interference, averaging the difference frequency of the rest section, and calculating the actual difference frequency of the FMCW radar according to the average value.

The following reference discloses highly-integrated and reconfigurable MIMO-SAR testbeds, along with examples of three-dimensional (3-D) image reconstruction algorithms optimized for MIMO-SAR configurations: YANIK MUHAMMET EMIN ET AL: "Development and Demonstration of MIMO-SAR mmWave Imaging Testbeds", IEEE ACCESS, IEEE, USA, vol. 8, 8 July 2020 (2020-07-08), pages 126019-126038, DOI: 10. 1109/ACCESS.2020.3007877

[Summary of Invention]

It is an object of some embodiments to provide improved techniques for frequency estimation for determining range of objects in a scene of interest. In this regard, it is also an object of some embodiments to provide systems and methods for performing frequency estimation in time domain in which phase noise statistics are modeled explicitly and are better described and understood. Some example embodiments aim to perform frequency estimation in the time domain and take advantage of the known phase noise statistics. Some example embodiments are specifically directed towards providing frequency estimation techniques for scenarios where the maximum distance to be measured is greater than the coherence length of the light source.

The present invention is defined in the independent claims. Some example embodiments are based on the realization that for coherent ranging techniques, the object distance measurement task becomes a frequency estimation problem since the distance to an object in a scene is a function of the beat frequency of the interference signal resulting from a mixing of a local copy of the transmitted beam with the light reflected back to the receiver. In coherent ranging techniques such as FMCW, depth measurement is affected by correlated noise. Accordingly, some example embodiments are based on a realization that for FMCW lidar, the laser phase noise causes the interference signal to deviate from the true beat frequency and as such the beat frequency estimation is prone to error if the phase noise statistics are not taken into consideration. In this regard, some example embodiments are based on the understanding that the statistics of the phase noise can be modeled explicitly in the time domain since they are not well understood in the frequency domain.

Some example embodiments also realize that frequency estimation in time domain may be performed by a two-stage process comprising phase unwrapping and linear regression. In this regard, some example embodiments take into consideration prior information about the linear nature of the underlying unwrapped phase. Some example embodiments realize that FMCW depth measurement is affected by correlated noise and therefore incorporate phase error estimation into the alternating optimization. Towards this end, example embodiments approach frequency estimation from the perspective of phase unwrapping, explicitly accounting for correlations in the phase noise.

It is also an object of some example embodiments to determine the maximum likelihood unwrapping sequence of wrapped phases using linear minimum mean squared error estimation of the phase error. Some example embodiments recognize that the phase error statistics are easier to derive than the resulting power spectral density (PSD) of the noisy sinusoidal measurement. Therefore, example embodiments of the present disclosure are capable of accommodating non-white laser frequency noise distributions into the frequency estimation task.

Various example embodiments consider laser-based sources for frequency estimation as part of the bigger range estimation problem. In this area, FMCW lidars are promising when it comes to applications such as autonomous navigation because they are more robust than pulsed lidar to ambient light or interference from other lidar systems. However, as discussed above, the phase noise in the FMCW lidar causes the instantaneous frequency to deviate from the desired frequency modulation and decreases the temporal coherence in the interfered light beams. Some example embodiments are based on the recognition that the loss of temporal coherence becomes more severe as the distance to the target increases. The coherence range - determined by the amount of phase noise - is considered to be the distance beyond which ranging cannot be reliably performed. Some example embodiments also realize that in order to reach long distances (e.g., needed for navigation), a hardware solution is to use lasers with low linewidth (i.e., low phase noise). However, such low-linewidth lasers tend to be expensive and increase the hardware complexity of the overall system.

Several example embodiments realize that one attempt to increase range may be by accounting for the effect of phase noise. For example, it is a realization of some example embodiments that a Lorentzian distribution may be fitted to the power spectral density (PSD) of the measured interference signal, since assuming a white frequency noise laser model, the PSD is asymptotically Lorentzian as a function of range. Some other example embodiments also realize that to address the problem of phase noise affecting lidar measurements, one solution is to perform frequency-domain estimation by fitting a Lorentzian curve to the power spectral density of the measurement. However, Lorentz curve is an approximation to the interference PSD, and the fitting assuming Gaussian statistics is not optimal.

Some other example embodiments also realize that to address the problem of phase noise affecting lidar measurements, another solution is to use additional reference arms and fixed depths to measure properties of phase impairments (including phase noise and nonlinearities). Particularly, correction of impairments (so standard frequency-domain peak-finding can be used) may be achieved, instead of including impairment modeling in the estimation process. However, such solutions require additional hardware and calibration.

In view of the aforementioned realizations, various example embodiments are based on the understanding that attempts to correct for phase errors or fit the PSD with a curve that makes a simplistic assumption about the distribution lead to suboptimal or infeasible solutions. Some example embodiments also recognize that such approaches cannot achieve acceptable levels of precision, especially under high signal to noise ratio conditions. Towards these ends, several example embodiments propose the use of the exact phase noise statistics in the time domain to achieve better performance, especially at high SNR. Additionally, the time-domain method provided by some example embodiments use the statistics for realistic laser models, instead of the naïve white frequency noise model.

As such, one primary problem for some example embodiments is how to best account for the effects of phase noise in the ranging process. In this regard, some example embodiments realize that the phase noise statistics are easiest to describe in the time domain (i.e., directly in the phase of the interference signal) rather than in the frequency domain after a Fourier transform. Specifically, some example embodiments describe the interference signal phase error in closed form for both white and coloured frequency noise, as compared to the PSD which is only known in closed form for white frequency noise. It is also a realization of some example embodiments that the phase error is a stationary Gaussian process, so it is completely described by its autocorrelation function. Some example embodiments are based on the understanding that using a quadrature demodulator, it is possible to extract the interference signal phase to perform phase-based frequency estimation. FMCW lidar systems conventionally use a single balanced detector, whereas a quadrature demodulator contains two balanced detectors for direct in-phase and quadrature measurements.

Some example embodiments provide solutions for frequency estimation via phase unwrapping. Some example embodiments exploit the advantage of the phase error correlations for unwrapping the measured phase, and then again use phases error correlations for linear regression of the unwrapped phase. In this regard, some example embodiments provide an iterative algorithm based on the above principles and that can be initialized by - and improve upon - less exact methods (e.g., Lorentzian fitting), showing better accuracy at high SNR.

In order to achieve the aforementioned objectives and advantages, some example embodiments provide systems, methods, and programs for coherent range estimation of an object in the scene.

For example, some example embodiments provide an FMCW device comprising an emitter configured to transmit at least one wave of radiation to a scene, wherein the transmitted wave is linearly modulated in a frequency domain subject to impairments causing a non-linearity of the transmitted wave in the frequency domain. A receiver receives a reflection of the transmitted wave from the scene, and a mixer interferes a copy of the transmitted wave with the received reflection of the transmitted wave to generate a beat signal. A pair of analog to digital converters generate a sequence of samples of the beat signal with wrapped phases in a time domain. A processor is configured to estimate a frequency of the beat signal in an iterative manner until a termination condition is met. The iterative estimation of the frequency of the beat signal is based on phase unwrapping of the samples of the beat signal subject to correlated phase error derived from phase noise statistics of unwrapped phase of the beat signal and a linear regression fitting the frequency of the beat signal into the unwrapped phase of the beat signal. The estimated frequency of the beat signal may be utilized by the circuitry to estimate a distance to an object in the scene.

Some example embodiments also provide a frequency estimation method utilizing an FMCW device, the method comprising transmitting at least one wave of radiation to a scene, wherein the transmitted wave is linearly modulated in a frequency domain subject to impairments causing a non-linearity of the transmitted wave in the frequency domain. The method further comprises receiving a reflection of the transmitted wave from the scene, interfering a copy of the transmitted wave with the received reflection of the transmitted wave to generate a beat signal and generating a sequence of samples of the beat signal with wrapped phases in a time domain. The method also comprises estimating a frequency of the beat signal in the time domain in an iterative manner until a termination condition is met. The iterative estimation of the frequency of the beat signal is based on phase unwrapping of the samples of the beat signal subject to correlated phase error derived from phase noise statistics of unwrapped phase of the beat signal and a linear regression fitting the frequency of the beat signal into the unwrapped phase of the beat signal.

Some example embodiments also provide a non-transitory computer readable medium having stored thereon instructions executable by a computer for performing a frequency estimation method utilizing a FMCW device. The frequency estimation method comprising transmitting at least one wave of radiation to a scene, wherein the transmitted wave is linearly modulated in a frequency domain subject to impairments causing a non-linearity of the transmitted wave in the frequency domain. The method further comprises receiving a reflection of the transmitted wave from the scene, interfering a copy of the transmitted wave with the received reflection of the transmitted wave to generate a beat signal and generating a sequence of samples of the beat signal with wrapped phases in a time domain. The method also comprises estimating a frequency of the beat signal in the time domain in an iterative manner until a termination condition is met. The iterative estimation of the frequency of the beat signal is based on phase unwrapping of the samples of the beat signal subject to correlated phase error derived from phase noise statistics of unwrapped phase of the beat signal and a linear regression fitting the frequency of the beat signal into the unwrapped phase of the beat signal.

According to some example embodiments, the generated beat signal is distorted due to the non-linearity of the linear modulation caused by the impairments. In some example embodiments, a current iteration of the iterative estimation includes determining, for each sample of the sequence of samples of the beat signal, a current phase error and a phase unwrapping number fitting a previous frequency of the beat signal and a previous phase offset of the beat signal determined during a previous iteration. The current phase error for a current sample in the sequence of the beat signal is correlated with a previous phase error for a previous sample in the sequence of the beat signal by predetermined phase noise statistics. The current iteration of the iterative estimation also includes updating a current frequency of the beat signal and a current phase offset of the beat signal for the current iteration based on the determined current phase error and the determined phase unwrapping number.

According to some example embodiments, the iterative estimation of the frequency is based on alternative optimization that includes a Viterbi algorithm determining the current phase error and the phase unwrapping number probabilistically to maximize a likelihood of their fitting in the entire sequence of samples of the beat signal. For each current sample of the sequence of samples of the beat signal, the Viterbi algorithm uses the previous phase errors and the previous phase unwrapping number determined for the previous samples for causal estimation of a current phase error and a current phase unwrapping number. The causal estimation of the current phase error and the current phase unwrapping number are determined via a linear minimum mean squared error estimation.

The presently disclosed embodiments will be further explained with reference to the following drawings. The drawings shown are not necessarily to scale, with emphasis instead generally being placed upon illustrating the principles of the presently disclosed embodiments.

[Brief Description of Drawings]

[FIG. 1A]

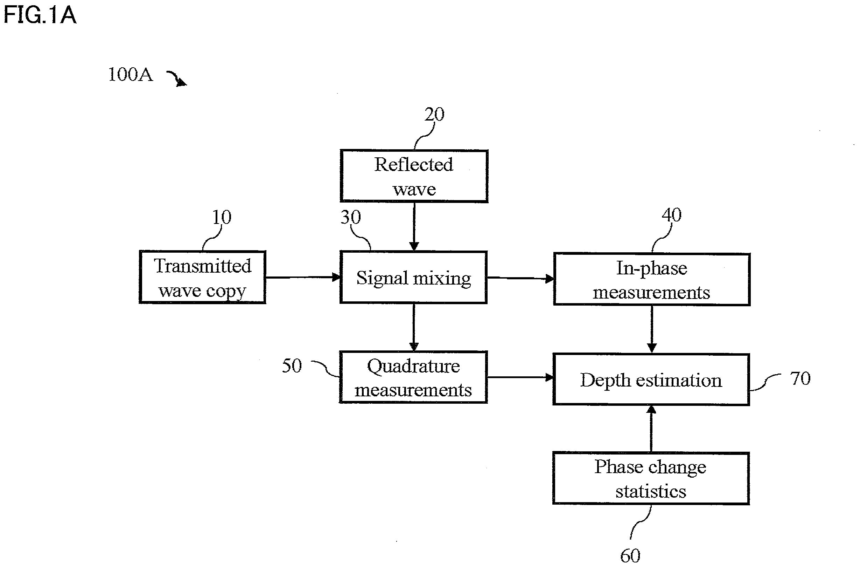

FIG. 1A illustrates a workflow for depth estimation in a scene using principles of a frequency modulation continuous wave device, according to some example embodiments.
[FIG. 1B]

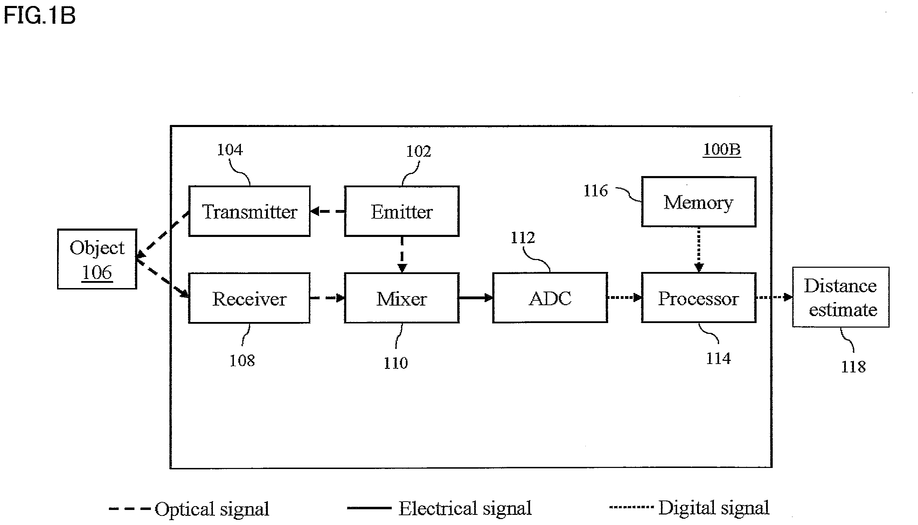

FIG. 1B shows a schematic of an FMCW lidar system for producing an estimate of the distance to an object, according to some example embodiments.
[FIG. 2A]

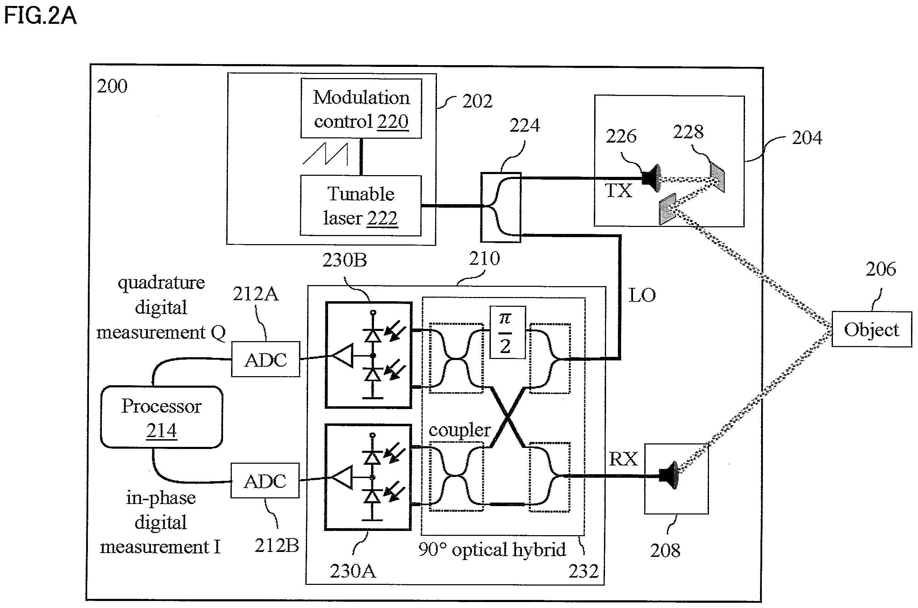

FIG. 2A illustrates a detailed schematic of an FMCW lidar system, according to some embodiments.
[FIG. 2B]

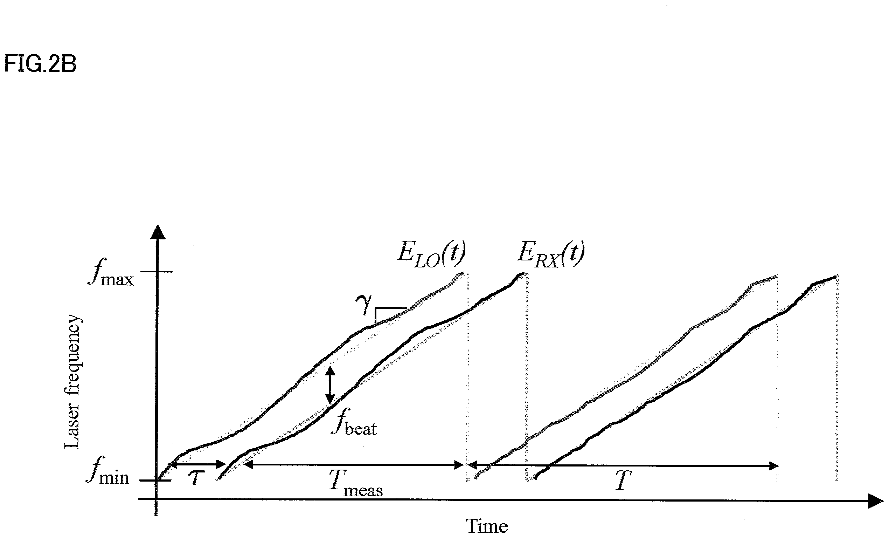

FIG. 2B illustrates a swept-frequency signal emitted from a tunable laser and its delayed copy captured at a receiver of an FMCW lidar system, according to some example embodiments.
[FIG. 2C]

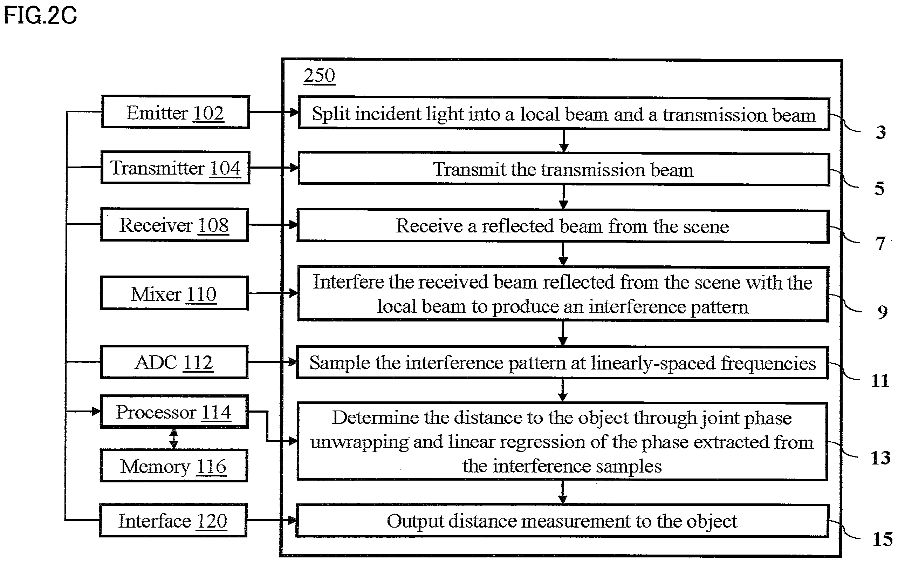

FIG. 2C illustrates an exemplar method for distance estimation using an FMCW lidar system, according to some example embodiments.
[FIG. 3]

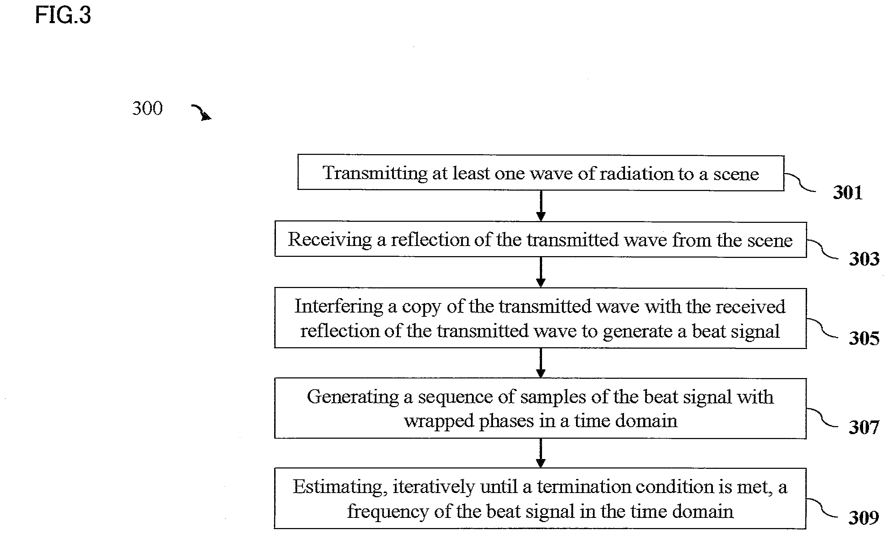

FIG. 3 illustrates an iterative frequency estimation method utilizing principles of a FMCW lidar system, according to some example embodiments.
[FIG. 4]

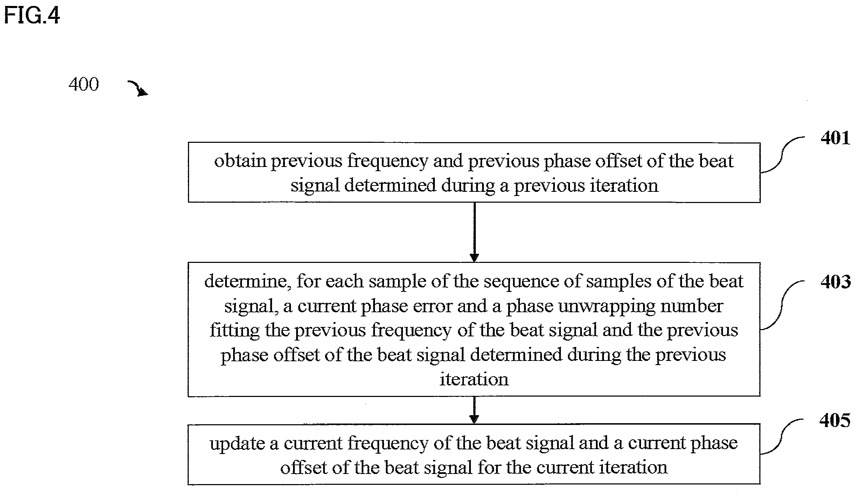

FIG. 4 illustrates a method describing one iteration of the iterative frequency estimation method of FIG. 3, according to some example embodiments.
[FIG. 5]

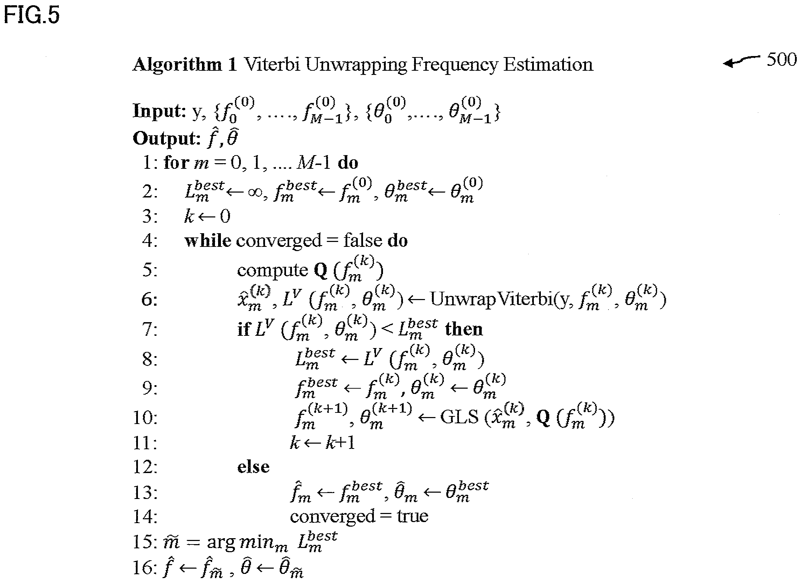

FIG. 5 illustrates an algorithm of Viterbi phase unwrapping for frequency estimation, according to some example embodiments.
[FIG. 6]

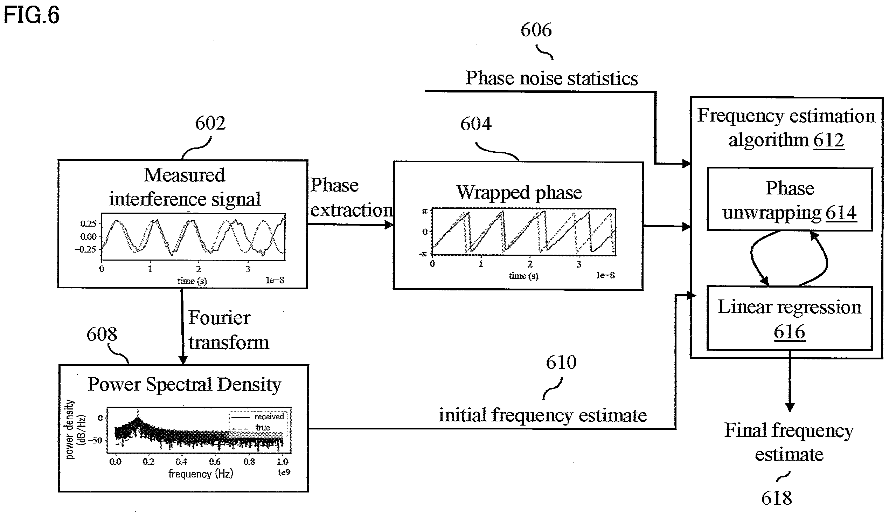

FIG. 6 illustrates schematics of a process of frequency estimation based on the signal phase, according to some example embodiments.
[FIG. 7A]

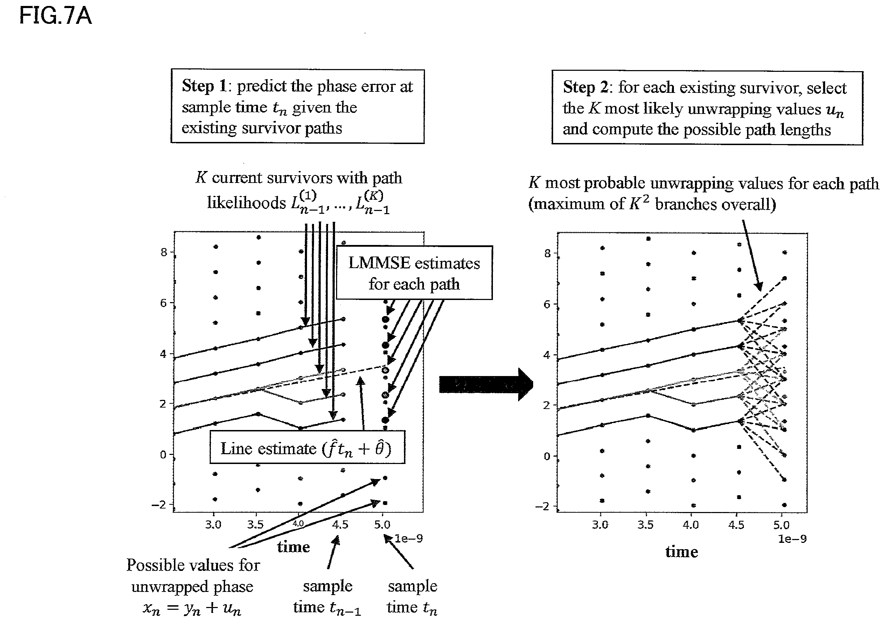

FIG. 7A illustrates a detailed schematic of the phase unwrapping step of the frequency estimation algorithm, according to some example embodiments.
[FIG. 7B]

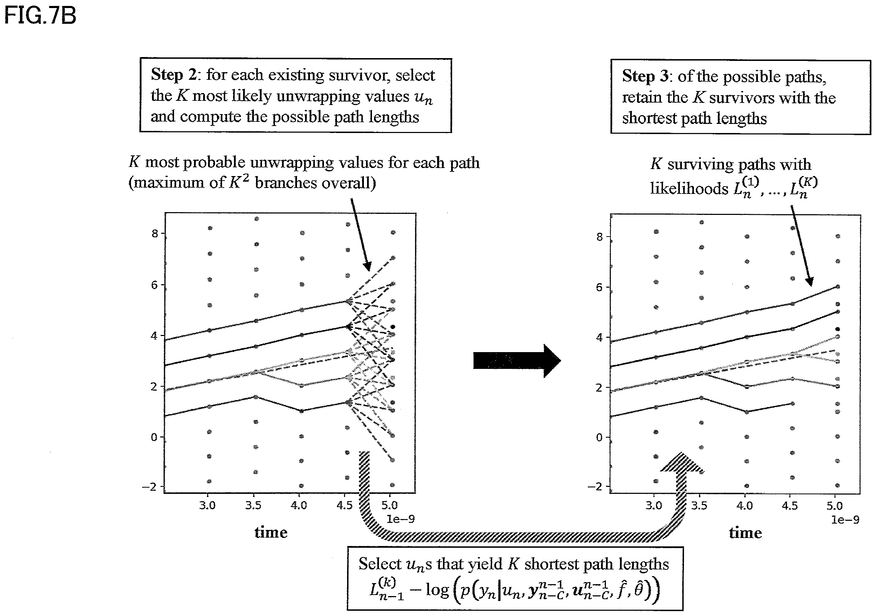

FIG. 7B illustrates a detailed schematic of the phase unwrapping step of the frequency estimation algorithm, according to some example embodiments.
[FIG. 7C]

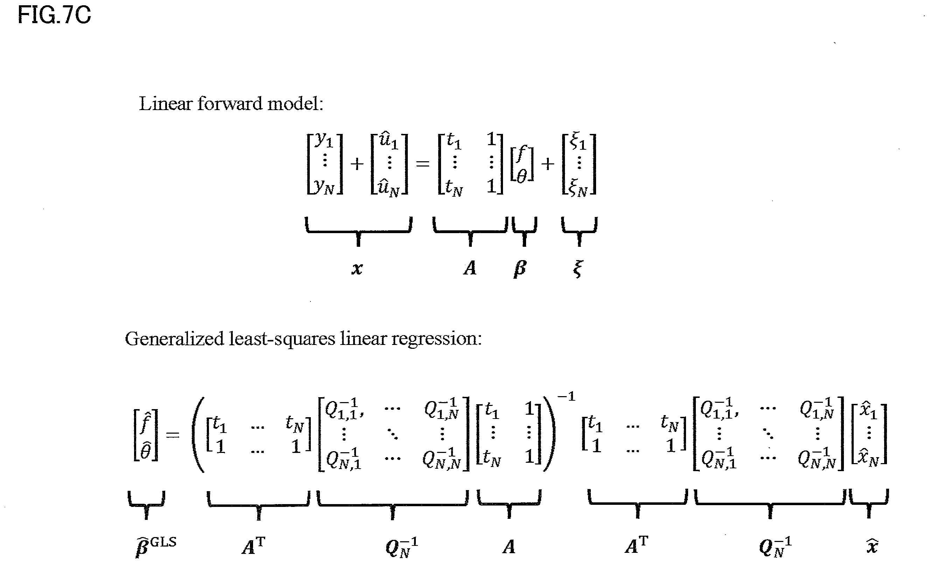

FIG. 7C illustrates the process of frequency refinement via linear regression in the frequency estimation algorithm, according to some example embodiments.
[FIG. 8]

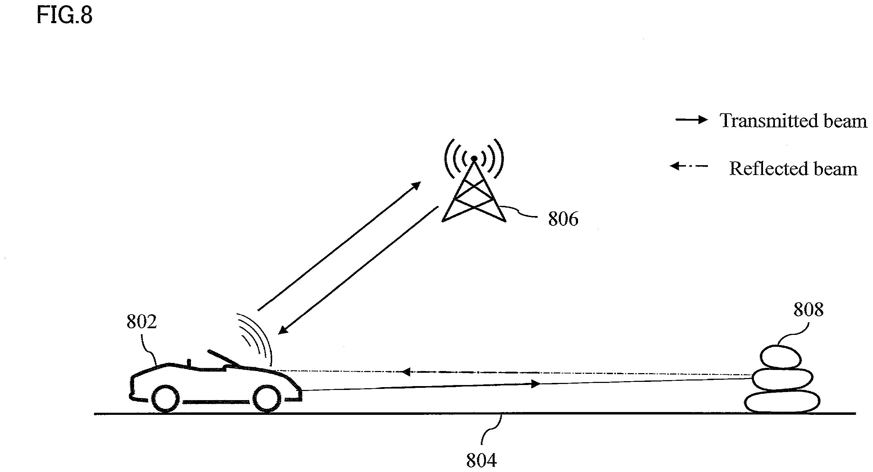

FIG. 8 illustrates a scenario depicting an example use case of an FMCW lidar system, according to some example embodiments.
[FIG. 9]

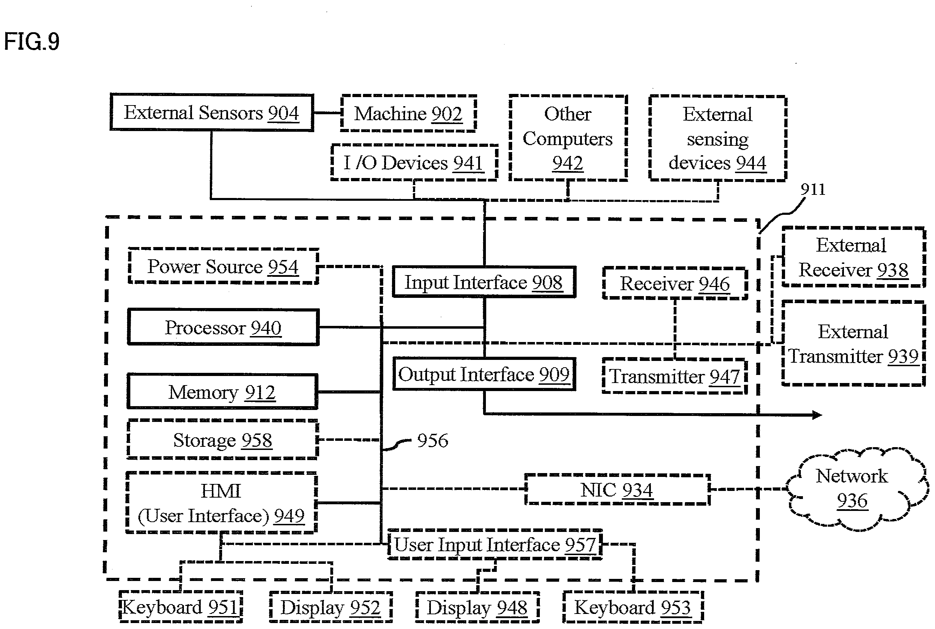

FIG. 9 illustrates a block diagram of a system for implementing an FMCW lidar system, according to some example embodiments.

[Description of Embodiments]

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

There has been a widescale adoption of imaging techniques in several application areas owing to the need to understand the environment around a subject for taking informed decisions. For example, in remote sensing applications, it is often desired that the physical characteristics of an area be described in as much clarity as possible. In other applications such as autonomous and semi-autonomous vehicles, taking time bound decisions is critical for the operation of such vehicles. For all such applications it is essential that depth estimation of objects in the scene of interest be performed accurately. Precise depth estimation is achievable by taking into consideration errors that occur in taking measurements of the scene. In most such scenarios the illumination source often introduces such errors in the measurements.

Lidar is an increasingly popular sensing modality for ranging applications varying from autonomous driving to industrial robotics and lunar navigation. Conventional pulsed lidar transmits a short pulse of light toward an object, and the distance to the object is calculated from the time that elapses until the reflected light returns to the lidar system. Since pulsed lidar is incoherent, measuring only the intensity of light at the detector, it is susceptible to errors due to ambient light or interference from other lidars. An alternative approach to distance estimation via laser light is frequency-modulated continuous-wave (FMCW) lidar. Unlike pulsed lidar, FMCW lidar has constant illumination power, which makes it compatible with integrated photonics. FMCW lidar is a coherent ranging technology that measures distance by mixing a local copy of the transmitted laser beam with the light reflected back to the receiver. The beat frequency of the resulting interference signal is proportional to the reflector range, so distance measurement becomes a frequency estimation problem.

However, as with any oscillator, a laser cannot produce a single pure frequency of light. Instead, thermal changes, mechanical vibration, and even the quantum nature of photons cause randomness in the phase of oscillation, which corresponds to deviations in the emitted frequency. When a laser is used for FMCW lidar, the the laser phase noise likewise causes the interference signal to deviate from the true beat frequency. Often assuming a sinusoid in additive noise, there is a maximum range that can be measured without excessive error. The maximum likelihood estimate of the frequency of a sinusoid in additive noise is the peak of the periodogram, but peak-finding methods perform poorly when phase noise distributes the signal power over a range of frequencies.

Even when the distance to an object is greater than the coherence length of the laser, an FMCW lidar measurement will still contain information about the distance. However, updated techniques are needed that take the statistics of the phase noise into account when performing frequency estimation. In general, the statistics of the phase noise can be modeled explicitly in the time domain. However, frequency estimation is usually performed in the frequency domain, and the phase noise statistics are less well understood in the frequency domain. Instead, when the maximum distance to be measured is greater than the coherence length of the laser, it is useful to perform frequency estimation in the time domain and take advantage of the known phase noise statistics.

Some solutions aim to perform frequency estimation in the time domain by phase unwrapping and linear regression. Many of these algorithms perform a naïve phase unwrapping procedure that does not take the linear nature of the underlying signal into account. More sophisticated methods use the prior information that the underlying unwrapped phase is linear in an algorithm that alternates between phase unwrapping using estimates of the frequency and phase offset, and updated estimation of the frequency and phase offset given the estimated unwrapping. However, none of these methods consider correlated noise settings. Since FMCW depth measurement is affected by correlated noise, example embodiments disclosed herein incorporate phase error estimation into the alternating optimization.

Given a candidate frequency, the proposed solutions approximately recover the maximum likelihood unwrapping sequence using a Viterbi algorithm and the phase noise statistics. The algorithm then alternates between unwrapping and frequency estimate refinement until convergence. The proposed solutions consistently achieve superior performance at long range or with large-linewidth lasers when the signal-to-noise ratio is sufficiently high. These and several other advantages emerge from the disclosed systems, methods and programs provided by the example embodiments.

A Frequency Modulated Continuous Wave lidar or FMCW lidar system is a special type of lidar system that measures both distance and velocity of moving objects. This is achieved by continuously varying the frequency of the transmitted signal by a modulating signal at a known rate over a fixed time period. This modulation is often used for a very precise distance measurement at close range by phase comparison of the two echo signal frequencies. FIG. 1A illustrates a workflow 100A for depth estimation in a scene using principles of a frequency modulation continuous wave (FMCW) device, according to some example embodiments.

A transmission wave for transmission into a scene is generated by one or more lasers of a lidar and fired towards the scene through suitable transmitters of the FMCW lidar system. A copy 10 of the transmitted wave is also stored locally for further processing. The transmitted wave is reflected from the scene and a reflected wave 20 is collected by suitable receivers of the FMCW lidar system. The copy 10 of the transmitted wave and the reflected wave 20 are fed into a mixer for signal mixing 30 which outputs measurements pertaining to the resultant interference signal. As a part of the mixing process, the optical signals may be converted into analog electronic signals which are then digitized to produce samples of the interference signal.

Let T be the sweep duration, $\phi_0$ the initial phase, $\omega_0$ the initial angular frequency, $\gamma$ the chirp rate, and $\phi_n$ the source phase noise. Within one chirp period, the transmitted wave copy 10 channel has normalized electric field given by:

$$E_{\mathrm{LO}}(t) = \mathrm{rect}\left(\frac{t-T/2}{T}\right)\cos\left(\phi_0 + \omega_0 t + \frac{\gamma t^2}{2} + \phi_n(t)\right) \qquad (1)$$

The received signal from the reflected wave 20 has an electric field $E_{\mathrm{RX}}(t) = \sqrt{R}\,E_{\mathrm{LO}}(t - \tau)$ which has been scaled by the target reflectivity R and delayed by $\tau = 2d/c$, where $d$ is the target distance and $c$ is the speed of light. The electric fields of the transmitted wave copy 10 ($E_{\mathrm{LO}}$) and the reflected wave 20 ($E_{\mathrm{RX}}$) fields are summed at a coherent receiver for signal mixing 30, and the lowpass filtered intensity is measured by a detector, with measurement window $T_{\mathrm{meas}}$ ensuring overlap of the mixed chirps.

The in-phase interference measurements 40 and quadrature measurements 50 are obtained as output of the signal mixing process 30. In some example embodiments, FMCW receivers may use a single balanced detector to capture the in-phase interference measurements 40, and the quadrature measurements 50 are computed from the in-phase interference measurements 40 via a Hilbert transform. In some example embodiments, a quadrature demodulator with two pairs of balanced detectors may capture both the in-phase measurements 40 and the quadrature measurements 50. The in-phase measurements 40 are given by:

$$i_{\mathrm{I}}(t) = \sqrt{R}\cos\left[\omega_0\tau - \frac{\gamma\tau^2}{2} + \gamma\tau t + \Delta\phi_n(t)\right] + w_I(t), \qquad (2)$$

where $\Delta\phi_n(t) = \phi_n(t) - \phi_n(t-\tau)$ is the phase change (also referred to as phase noise) and $w_I$ is approximately additive white Gaussian noise (AWGN) with variance $\sigma_w^2/2$.

The quadrature measurements 50 are given by:

$$i_{\mathrm{Q}}(t) = \sqrt{R}\sin\left[\omega_0\tau - \frac{\gamma\tau^2}{2} + \gamma\tau t + \Delta\phi_n(t)\right] + w_Q(t), \qquad (3)$$

where $w_I$ and $w_I$ are independent and identically distributed.

The observed interference signal is expressed as a complex valued sinusoid of the in-phase measurements 40 and the quadrature measurements 50.

$$r(t) = i_I(t) + ji_Q(t)$$

$$= a \exp\{j2\pi[ft + \theta + \eta(t)]\} + w(t), \tag{4}$$

where $a = \sqrt{R}$ is the signal amplitude, $f = \gamma\tau$ is the beat frequency, $\theta = \omega_0\tau - \dfrac{\gamma\tau^2}{2}$ is the phase offset, $\eta(t) = \Delta\phi_n(t)$ is a stationary random process denoting the phase change, and $w(t) = w_I(t) + jw_Q(t)$ is circularly symmetric complex AWGN with

autocorrelation $\Re_w(t) = \sigma_w^2 \delta(t)$. The signal-to-noise-ratio (SNR) due to AWGN is $a^2/\sigma_\omega^2$. Samples at times $t_n$, $n = 0, 1, \ldots N - 1$ are given as:

$$r_n = a \exp\{j2\pi[ft_n + \theta + \eta_n]\} + w_n. \tag{5}$$

The argument of $r_n$ is extracted as atan2($i_Q(t_n)$, $i_I(t_n)$):

$$\angle r_n = 2\pi[ft_n + \theta + \eta_n + \epsilon_n], \pmod{2\pi} \tag{6}$$

where $\varepsilon_n$ describes the effective phase error due to the AWGN and is known as additive observation phase noise (AOPN). The unwrapped phase is expressed two different ways, as:

$$x_n = ft_n + \theta + \xi_n, \tag{7}$$

where $\xi_n = \eta_n + \varepsilon_n$ is the total phase error, or equivalently as

$$x_n = y_n + u_n, \tag{8}$$

where $y_n = \angle r_n/(2\pi)$ is the extracted wrapped phase (modulo 1), and $u_n \in \mathbb{Z}$ is the unknown integer number of cycles that must be added to the wrapped phase to perform phase unwrapping.

The resultant expression expresses the interference signal in terms of its amplitude, the beat frequency, the phase offset, a stationary random process denoting the phase change, and circularly symmetric complex AWGN with autocorrelation. Thereafter, the unwrapped phase is defined as a function of the beat frequency, the phase offset, and the total phase error. The unwrapped phase is a sum of extracted wrapped phase and an unknown integer number of cycles that must be added to the wrapped phase to perform phase unwrapping.

Depth estimation 70 requires estimating the frequency of the beat signal from wrapped phase vector using the known phase change statistics 60. Then the final depth estimate rescales the frequency estimate by the chirp rate $\gamma$ and the speed of light c as

$$\hat{d} = \frac{c\hat{f}}{2\gamma}.$$

However, directly maximizing the likelihood of the wrapped phase $p(\mathbf{y}|f, \theta)$ is difficult because the positions of the discontinuities in the wrapped phase $\mathbf{y}$ are unknown. If the number of unwrappings $\mathbf{u}$ is recovered, yielding the complete data $\mathbf{x} = \mathbf{y} + \mathbf{u}$, then maximizing the likelihood of the unwrapped phase $p(\mathbf{x}|f, \theta)$ is straightforward because x is an affine function in correlated Gaussian noise. In this regard, the goal becomes determining the maximum likelihood estimate of the sequence of integer-valued unwrappings $\mathbf{u}$, given the observed data y and initial estimates of the frequency $\hat{f}$ and phase offset $\hat{\theta}$. The Viterbi algorithm estimates the maximum likelihood sequence by assigning a length to transitions between possible states (the unwrapping values $u_n$) and then recursively finding the sequence of states with the shortest path length. The most likely sequence has the shortest path. Based on the unwrapped phase estimate $\hat{x} = y + \hat{u}$ computed from Viterbi phase unwrapping, the estimates of frequency $\hat{f}$ and phase offset $\hat{\theta}$ may be refined by fitting an affine function.

The workflow 100A initializes the estimation procedure at a discrete set of M initial frequencies

$\{f_0^{(0)}, ...., f_{M-1}^{(0)}\}$ and phase offsets $\{\theta_0^{(0)}, ...., \theta_{M-1}^{(0)}\}$. Starting with an initial pair $f_m^{(0)}$ and $\theta_m^{(0)}$, the workflow iteratively performs Viterbi phase unwrapping and refinement of the estimates of frequency $\hat{f}$ and phase offset $\hat{\theta}$ as long as the path length $L^V$ of the unwrapping sequence decreases. Then the final estimates of frequency $\hat{f}$ and phase offset $\hat{\theta}$ are the frequency/offset pair that produced the lowest path length $L^V$ over all M grid points.

Having obtained the frequency of the beat signal, the distance estimate to an object from which the reflected wave 20 was reflected may be determined as an output of the depth estimation 70. In this way, the exemplar workflow 100A, by taking into consideration the correlated noise, provides accurate estimates of the beat frequency even when phase error is significant.

The exemplar workflow 100A may be compiled as a machine executable process or method and may be executed with an FMCW device or lidar system. Details of the components and working of such an FMCW lidar system are described next with reference to FIG. 1B which illustrates a schematic of an FMCW lidar system 100B that produces an estimate 118 of the distance to an object 106. The FMCW lidar system 100B comprises an emitter 102, a transmitter 104, a receiver 108, a mixer 110, an analog-to-digital converter (ADC) 112, a processor 114, and a memory 116.

In some example embodiments, the emitter 102 comprises a suitable light source such as laser and frequency modulation electronics. In some embodiments, the laser may be a tunable laser, and the frequency is modulated by controlling the laser oscillation directly. In some example embodiments, the laser may be a fixed-frequency laser, and the frequency may be modulated externally, e.g., using an electro-optical modulator. In some example embodiments, the emitter 102 transmits to a scene, a wave of radiation (such as the laser). Prior to transmission, the wave of radiation is linearly modulated in the frequency domain. The linear modulation is affected by impairments arising due to for example source phase noise causing non-linearity of the wave of radiation in the frequency domain.

In some example embodiments, the transmitter 104 comprises optics that steer and focus the laser beam on the object 106 to be measured. Focus may be achieved via a lens or combination of lenses. Beam-steering technologies utilized by some example embodiments include without limitation, mechanically-scanned mirrors, optical phased arrays, microelectromechanical systems (MEMS) mirrors, and liquid crystal meta surfaces.

The receiver 108 comprises focusing optics to collect light reflected from the object. The receiver may comprise a lens or lenses to focus the reflected light and a free-space-to-fiber coupler to couple the received light into a fiber optic cable.

The mixer 110 optically combines a copy of the light from the emitter 102 (the local oscillator) with light captured by the receiver to generate a beat signal. The beat signal is distorted due to the non-linearity of the linear modulation caused by the impairments due to laser phase noise. In some embodiments, the mixing is performed with a beam-splitter. In other embodiments, mixing is performed by a fiber-optic coupler. A detector of the mixer 110 then converts the optical signal to an analog electronic signal (e.g., a voltage or a current). The detector may be a single photodiode or a combination of photodiodes, such as in a balanced detector. The detector may also include amplification circuitry to increase the level of the electrical signal.

The ADC 112 converts the analog electrical signal to a digital signal at predetermined sampled times. The ADC 112 comprises sampling and quantization electronics that output a digital signal. In some embodiments, the ADC 112 has uniformly-spaced samples in time. In other embodiments, the ADC 112 uses an external reference such as a k-clock to determine sample times to correspond with a linear frequency sweep of the laser.

The processor 114 uses the digitized samples of the mixed signal to estimate the distance to the object. In some embodiments, the processor 114 is an on-board device such as a field-programmable gate array (FPGA). In other embodiments, the processor 114 is an external computer. The memory 116 amongst other things contains calibration data and parameters needed for the processor to make an accurate distance estimate 118.

FIG. 2A illustrates a detailed schematic of an FMCW lidar system 200, according to some embodiments. In some example embodiments, the FMCW lidar system 200 may be embodied as a device. In some example embodiments the FMCW lidar system 200 may be a distributed system comprising electrical devices and optical devices. For example, the FMCW lidar system 200 may be realized using a controller and an opto-electronic device. The controller may comprise the data processing components of the FMCW lidar system 200 such as the processor and its associated circuitry. The opto-electronic components may comprise other electrical and optical components of the FMCW lidar system 200.

The FMCW lidar system 200 comprises an emitter 202, a transmitter 204, a receiver 208, a mixer 210, a pair of analog to digital converters (ADC) 212A and 212B, and a processor 214. The emitter 202 comprises a tunable laser 222 and its modulation controller 220. The tunable laser 222 is fiber-coupled and connected to a splitter 224 that creates two copies of the laser beam. The first copy is sent to the transmitter 204, in which a collimator 226 focuses the light from the optical fiber into a bundle of parallel rays. Beam-steering optics, such as a pair of galvo mirrors 228, are used to direct the transmit beam towards the object 206.

The wavelength of the tunable laser 222 is swept by a modulation controller 220 so that the optical frequency of the laser beam is a linear function of time (i.e. linearly modulated in frequency domain). As illustrated in FIG. 2B, a swept-frequency signal is emitted from the tunable laser 222 and its delayed copy is captured at the receiver 208 of the FMCW lidar system 200, according to some example embodiments. Light reflected from the object 206 is captured at the receiver 208, which focuses light from free space into an optical fiber.

Assuming $T$ to be the sweep duration of the tunable laser 222, the sweep is a linear chirp between the start frequency $f_{min}$ and the end frequency $f_{max}$. Phase noise $\varphi_n$ causes the emitted light frequency to randomly deviate from the desired linear sweep. Subsequently the initial phase $\varphi_0$, the initial angular frequency $\omega_0$, and the chirp rate $\gamma$ are defined. Within one chirp period, the local oscillator (LO) channel has normalized electric field given by:

$$E_{LO}(t) = \text{rect}\left(\frac{t - \frac{T}{2}}{T}\right) \cos\left(\phi_0 + \omega_0 t + \frac{\gamma t^2}{2} + \phi_n(t)\right).$$

The received signal electric field $E_{RX}(t) = \sqrt{R} \, E_{LO}(t - \tau)$ for the received light (RX), has been scaled by the object reflectivity $R$ and delayed by $\tau = 2d/c$, where $d$ is the distance from the transmitter 204 to the object 206, and c is the speed of light. For a static lidar system 200 and object 206, the delay $\tau$ is constant. Still, when $E_{LO}$ and $E_{RX}$ are optically combined in the mixer 210, the resultant interference signal's frequency differs from the expected beat frequency $f_{beat}$ due to the phase noise. Depth estimation only uses the interference signal within the measurement window $T_{meas}$ ensuring overlap of the mixed chirps.

Referring to FIG. 2A, the mixer 210, comprises a 90-degree optical hybrid 232 and a pair of balanced detectors 230A and 230B. The mixer 210 through an input port, receives the received light (RX) and through another input port, receives the local oscillator (LO), which is the second copy of the laser beam. The LO and RX fields are combined in the optical hybrid 232 to produce two pairs of mixed outputs. Each of the outputs is connected to a balanced detector (230A or 230B), which uses a pair of photodiodes and an amplifier to convert the optical signals into electrical signals. In this regard, the mixer 210 has one branch for the in-phase component (I) and one branch for the quadrature component (Q). In the I-branch, the LO and RX optical signals are combined to get the photocurrent at each photodiode of the balanced detector 230A as:

$$i_{I+}(t) = \langle |E_{LO}(t) + E_{RX}(t)|^2 \rangle_t$$

$$= \text{rect}\left(\frac{t - \frac{T_{meas}}{2}}{T_{meas}}\right)\left[\frac{1 + R}{2} + \sqrt{R} \, cos\left(\omega_0 \tau - \frac{\gamma \tau^2}{2} + \gamma\tau t + \Delta\phi_n(t)\right)\right],$$

and

$$i_{I-}(t) = \langle |E_{LO}(t) - E_{RX}(t)|^2 \rangle_t$$

$$= \text{rect}\left(\frac{t - \frac{T_{meas}}{2}}{T_{meas}}\right)\left[\frac{1 + R}{2} - \sqrt{R} \cos\left(\omega_0 \tau - \frac{\gamma \tau^2}{2} + \gamma\tau t + \Delta\phi_n(t)\right)\right],$$

where $\Delta\phi_n(t) = \varphi_n(t) - \varphi_n(t-\tau)$ is the "phase change," i.e., the phase error in an interferometric measurement due to phase noise in an oscillator such as a laser. Balanced detector 230A filters out the DC terms and common-mode noise by taking the difference between the two photocurrents:

$$i_I(t) = \frac{i_{I+}(t) - i_{I-}(t)}{2}.$$

Considering only the time duration within the rect function, the in-phase interference measurement is

$$i_I(t) = \sqrt{R} \cos\left[\omega_0\,\tau - \gamma\frac{\tau^2}{2} + \gamma\tau\,t + \Delta\phi_n(t)\right] + w_I(t),$$

where $w_I$ is approximated as additive white Gaussian noise (AWGN) with variance $\sigma_w^2/2$.

In the Q-branch, the LO signal is first phase-shifted by $\pi/2$ radians (90°) to get

$$E_{LO,S}(t) = \text{rect}\left(\frac{t - \frac{T}{2}}{T}\right)\sin\left(\phi_0 + \omega_0 t + \frac{\gamma t^2}{2} + \phi_n(t)\right).$$

Then the LO and RX optical signals are combined to get the photocurrent at each photodiode of the balanced detector 230B:

$$i_{Q+}(t) = \left\langle \left|E_{LO,S}(t) + E_{RX}(t)\right|^2 \right\rangle_t$$

$$= \text{rect}\left(\frac{t - \frac{T_{meas}}{2}}{T_{meas}}\right)\left[\frac{1+R}{2} + \sqrt{R}\sin\left(\omega_0\tau - \frac{\gamma\,\tau^2}{2} + \gamma\tau t + \Delta\phi_n(t)\right)\right],$$

and

$$i_{Q-}(t) = \left\langle \left|E_{LO,S}(t) - E_{RX}(t)\right|^2 \right\rangle_t$$

$$= \text{rect}\left(\frac{t - \frac{T_{meas}}{2}}{T_{meas}}\right)\left[\frac{1+R}{2} - \sqrt{R}\sin\left(\omega_0\tau - \frac{\gamma\,\tau^2}{2} + \gamma\tau t + \Delta\phi_n(t)\right)\right]$$

Balanced detector 230B filters out the DC terms and common-mode noise by taking the difference between the two photocurrents

$$i_Q(t) = \frac{i_{Q+}(t) - i_{Q-}(t)}{2}.$$

The quadrature measurement takes the form:

$$i_Q(t) = \sqrt{R}\sin\left[\omega_0\,\tau - \gamma\frac{\tau^2}{2} + \gamma\tau\,t + \Delta\phi_n(t)\right] + w_Q(t),$$

where $w_Q$ and $w_I$ are independent and identically distributed.

In some example embodiments, the mixer 210 may use a single coupler instead of the optical hybrid to mix the LO and RX electric fields and single balanced detector to capture the in-phase measurement. Then the quadrature component is approximated by the Hilbert transform of the in-phase measurement $\hat{\imath}_Q(t) = \mathcal{H}(i_I(t))$.

Each of the ADCs (212A or 212B) comprises circuits that low-pass-filter, sample, and quantize the electrical signal to produce the in-phase (I) and quadrature (Q) digital measurements. The processor 214 extracts the phase from the I/Q components to perform depth estimation.

In some example embodiments, the FMCW lidar system and the FMCW device may be same. In some alternate embodiments, the lidar system may be external to the FMCW device, wherein the FMCW device may control one or more operations of the lidar. Irrespective of its realization, the FMCW lidar system 200 may execute the workflow 100A as a process or method. FIG. 2C illustrates one such exemplar method 250 for distance estimation using an FMCW lidar system such as the FMCW lidar system 200, according to some example embodiments.

The method 250 comprises splitting 3 the incident light into a local beam and a transmission beam. The splitting 3 may be performed by the emitter 202 of the FMCW lidar system 200. The transmission beam is transmitted 5 towards a scene of interest by the transmitter 204 of the FMCW lidar system 200. A reflection of the transmission beam from the scene is received 7 by the receiver 208 of the FMCW lidar system as a reflected beam. One or more objects may reflect the transmission beam in the scene towards the FMCW lidar system. The mixer 210 interferes 9 the received beam reflected from the scene with the local beam to produce an interference pattern. In this regard, the mixer 210 may perform the interference according to principles of the signal mixing 30 process of the workflow 100A.

One or more analog to digital converters (ADC) 112 sample 11 the interference pattern at linearly spaced frequencies to generate samples of the interference signals in the manner described with reference to the workflow 100A of FIG. 1A. One or more processors 114 may interface with a memory 116 storing executable programs, data, and instructions to determine 13 a distance to an object in the scene through joint phase unwrapping and linear regression of the phase extracted from the interference samples. The phase unwrapping and refinement through linear regression may be performed in the manner described with reference to the workflow 100A. The distance is determined by rescaling the estimated beat frequency by the chirp rate and the speed of light. The one or more processors 114 may control an interface 120 such as an output device to output 15 the determined distance of the object in any suitable manner.

FIG. 3 illustrates an iterative frequency estimation method 300 utilizing components of an FMCW device, according to some example embodiments. The frequency estimation method 300 may be compiled and executed as a control process for the FMCW lidar system. In some example embodiments, the method 300 may comprise actions performed by one or more components of the FMCW lidar system 200. The method 300 comprises transmitting 301 at least one wave of radiation to a scene. The transmission 301 may be preceded by preprocessing such as generating and steering the at least one wave of radiation which may be performed by any suitable irradiation source such as a laser, a UV lamp, an IR lamp. Also, the preprocessing may comprise obtaining a local copy of the transmitted wave. The transmission 301 may comprise utilizing suitable optics and associated electronics to direct the at least one wave of radiation towards the scene.

The scene may contain one or more objects and upon irradiation, the one or more objects may transmit back a reflection of the transmitted wave of radiation. The reflection of the transmitted wave may be received 303 from the scene by one or more receivers. The method 300 further comprises interfering 305 the copy of the transmitted wave with the received reflection of the transmitted wave to generate a beat signal. The interference may be performed in the manner described previously with respect to FIG. 1A and FIG. 2A. The interference results in a beat signal which is generated 307 as a sequence of samples with wrapped phases in time domain. Thereafter, executing a phase unwrapping followed by linear regression in an iterative manner, the frequency of the beat signal in time domain is estimated 309 iteratively until a termination condition is met.

FIG. 4 illustrates a method 400 describing a current iteration of the iterative frequency estimation method 300 of FIG. 3, according to some example embodiments. For a current iteration, the method 400 is initialized with the estimate of frequency and phase offset for the iteration immediately preceding the current iteration. For the first iteration, the method 400 is initialized with initial estimates of the frequency $\hat{f}$ and phase offset $\hat{\theta}$. Thus, for the first iteration, the initial estimates of the frequency and phase offset are obtained 401 as previous frequency and previous phase offset of the beat signal. The method 400 further comprises determining 403 a current phase error and a phase unwrapping number (the number of unwrappings $u$) fitting the previous frequency and previous phase offset of the beat signal. The phase error and phase unwrapping number are determined in accordance with the fundamentals of the workflow 100A illustrated in FIG. 1A. The maximum likelihood unwrapping sequence of wrapped phases using linear minimum mean squared error estimation of the phase error is subsequently determined. Thereafter, using a Viterbi phase unwrapping algorithm, a length is assigned to transitions between possible states (the unwrapping values $u_n$). The method 400 proceeds to updating 405 a current estimate of the frequency and a current phase offset of the beat signal for the current iteration.

FIG. 5 illustrates an algorithm 500 of Viterbi phase unwrapping for frequency estimation, according to some example embodiments. The algorithm 500 takes as input, wrapped phase **y,** and a discrete set of M initial frequencies $\{f_0^{(0)}, ...., f_{M-1}^{(0)}\}$ and phase offsets $\{\theta_0^{(0)}, ...., \theta_{M-1}^{(0)}\}$. Starting with an initial pair $f_m^{(0)}$ and $\theta_m^{(0)}$, where $m = 0, 1, ... M$-1, the algorithm 500 proceeds to iteratively perform phase unwrapping and refinement of the estimates of frequency $\hat{f}$ and phase offset $\hat{\theta}$ as long as the path length $L^V$ of the unwrapping sequence decreases. Then the final estimates of frequency $\hat{f}$ and phase offset $\hat{\theta}$ are the frequency/offset pair that produced the lowest path length $L^V$ over all M grid points.

FIG. 6 illustrates schematics of a process of frequency estimation based on the signal phase, according to some example embodiments. The measured in-phase and quadrature components are combined to get a single complex-valued sinusoid 602 $r(t) = i_I(t) + ji_Q(t)$.

The wrapped phase 604 is extracted from the measured signal 602. However, the wrapped phase may be insufficient for estimating the frequency in the time domain due to missing information about where and how many wrappings occur. Predicting the location and magnitude of the phase wrapping is further complicated by the deviations due to phase noise. To perform robust frequency estimation, the frequency estimation algorithm 612 thus jointly unwraps the phase and estimates the frequency in an alternating manner. In addition to the wrapped phase 604, the estimation algorithm 612 requires knowledge of the phase noise statistics 606 and an initial frequency estimate 610. Phase noise statistics 606 are known from prior calibration or manufacturer specification of properties such as the linewidth. The initial estimate of frequency 610 is obtained by computing the power spectral density of the measured signal 602 via a Fourier transform.

Given these inputs, the frequency estimation algorithm 612 proceeds in two alternating steps: phase unwrapping 614, which predicts the location and magnitude of the phase wrappings, and linear regression 616, which updates the estimate of the frequency. After a sufficient number of iterations, the latest result of linear regression is considered the final frequency estimate 618.

For simplicity, additional notation is introduced to expand the sinusoid 602 definition to

$$r(t) = a \exp(j \, 2\pi \, [ft + \theta + \eta(t)]) + w(t),$$

where $a = \sqrt{R}$ is the signal amplitude, $f = \gamma\tau$ is the beat frequency, $\theta = \omega_0 \tau - \gamma\tau^2/2$ is the phase offset, $\eta(t) = \Delta\phi_n(t)$ is a stationary random process denoting the phase change, and $w(t) = w_I(t) + jw_Q(t)$ is circularly symmetric complex AWGN with autocorrelation $\mathcal{R}_w(t) = \sigma_w^2 \, \delta(t)$. The signal-to-noise-ratio (SNR) due to AWGN is $a^2/\sigma_w^2$.

Samples at times $t_n$, n = 0, 1, ..., N-1 are given as

$$r_n = a \exp\{j \, 2\pi[f \, t_n + \theta + \eta_n]\} + w_n.$$

The principal argument of $r_n$ is extracted as atan2($i_Q(t_n)$, $i_I(t_n)$) and yields

$$\angle r_n = 2\pi \, [f \, t_n + \theta + \eta_n + \epsilon_n], \qquad (\mathrm{mod} \, 2\pi)$$

where $\varepsilon_n$ describes the effective phase error due to the AWGN and is known as additive observation phase noise (AOPN). The unwrapped phase is further defined as:

$$x_n = f t_n + \theta + \xi_n$$
$$= y_n + u_n,$$

**where** $\xi_n = \eta_n + \varepsilon_n$ is the total phase error, $y_n = \angle r_n/(2\pi)$ is the extracted wrapped phase (modulo 1), and $u_n \in \mathbb{Z}$ is the unknown integer number of cycles that must be added to the wrapped phase to perform phase unwrapping.

The two equivalent definitions of the unwrapped phase highlight the reason for the two-step estimation process. In the first definition, the unwrapped phase $x_n = ft_n + \theta + \xi_n$ is a linear function $ft_n + \theta$ corrupted by additive noise $\xi_n$. Estimating the slope $f$ from samples $x_n$ of a noisy linear function has many existing techniques, including ordinary least squares (OLS) and generalized least squares (GLS) if the noise is Gaussian. However, the samples $x_n$ are not available. Instead, only the wrapped phase $y_n$ is known. Thus, the problem becomes how to determine the unwrapping numbers $u_n$, which is a hard problem in the presence of noise. Still, preliminary estimates of frequency $f$ and phase offset $\theta$ can guide the unwrapping, with the remaining uncertainty being attributed to the phase error $\xi_n$. Hence, estimation cycles through the two definitions of the unwrapped phase $x_n$ to recover the true frequency $f$. Details of the phase unwrapping step 614 of the frequency estimation algorithm 612 are described next with reference to FIG. 7A and 7B. Particularly, FIG. 7A illustrates the computation of path lengths of the unwrapping sequences while FIG. 7B illustrate the shortest path estimation, according to some example embodiments.

The goal is to find the approximate maximum likelihood estimate given by:

$$\widehat{\boldsymbol{u}} = \arg\max_{\boldsymbol{u}} p(\boldsymbol{y} \mid \boldsymbol{u}, \hat{f}, \hat{\theta})$$

$$\approx \arg\max_{\boldsymbol{u}} \prod_{n=0}^{N-1} p(y_n \mid u_n, \boldsymbol{y}_{n-1:n-C}, \widehat{\boldsymbol{u}}_{n-1:n-C}, \hat{f}, \hat{\theta}),$$

assuming the unwrapping process is causal, and using a finite memory of length $C$. Phase unwrapping proceeds sample by sample by first estimating the likelihood of a particular unwrapping number $u_n$ at sample $n$. Then the Viterbi algorithm is used to determine the most likely sequence of unwrapping numbers. The Viterbi algorithm estimates the maximum likelihood sequence by assigning a length (the negative log-likelihood) to transitions between possible unwrapping values $u_n$ and then recursively finding the sequence of states with the shortest path length. The possible unwrapping numbers at each time step is large, so per-survivor processing is used to keep only a fixed number of $K$ survivor paths.

The inputs to the phase unwrapping step 614 are the wrapped phase vector $\boldsymbol{y}$, initial frequency estimate $f$ and phase offset estimate $\hat{\theta}$ the phase noise statistics, time samples $\mathbf{t} = [t_0, t_1, ..., t_{N-1}]^T$, and the number of survivors $K$. The phase noise statistics are contained in two components: the cross-covariance vector $\mathbf{p}_C$, the auto-covariance matrix $\mathbf{Q}_C$. The cross-covariance vector $\mathbf{p}_C$ has elements:

$$[\boldsymbol{p}_C]_i = \mathbb{E}[\eta_n \eta_{n-C+i}] + \mathbb{E}[\epsilon_n \epsilon_{n-C+i}],$$

and auto-covariance matrix $\mathbf{Q}_C$ has elements:

$$[\boldsymbol{Q}_C]_{i,j} = \mathbb{E}[\eta_{n-C+i} \eta_{n-C+j}] + \mathbb{E}[\epsilon_{n-C+i} \epsilon_{n-C+j}],$$

where $i, j \in (0, ..., C-1)$. Both components are completely determined by the autocorrelation functions of the laser source phase noise and the additive noise of the receiver. Since both $f$ and the phase noise statistics depend on $\tau$ in the FMCW lidar setting, the covariance matrix $\mathbf{Q}_C$ and correlation vector $\mathbf{p}_C$ can be computed given $\hat{f}$.

Phase unwrapping proceeds as follows. For each sample time $t_n$, there are $K$ existing possible paths for the unwrapped phase $\boldsymbol{x}_{1:n-1}^{(1)}, ..., \boldsymbol{x}_{1:n-1}^{(K)}$, which are determined from the known wrapped phase $\boldsymbol{y}$ and the candidate unwrapping numbers $\widehat{\boldsymbol{u}}_{1:n-1}^{(1)}, ..., \widehat{\boldsymbol{u}}_{1:n-1}^{(K)}$. Notation $\mathbf{z}_{n-C:n-1}$ indicates elements $[z_{n-C}, ..., z_{n-1}]^T$, which are a subset of the vector $\mathbf{z}$. Each existing survivor path $k$ has a length $L_{n-1}^{(k)}$. For any sample $n = C+1,...,N$, and for each survivor $k=1,...,K$, the C previous unwrapping estimates in the path are $\widehat{\boldsymbol{u}}_{n-C:n-1}^{(k)} = \left[ \hat{u}_{n-C}^{(k)}, ..., \hat{u}_{n-1}^{(k)} \right]$. The line given by initial frequency estimate $f$ and phase offset estimate $\hat{\theta}$ is $\hat{f}t + \theta$. The deviation from this line is predicted by estimating the phase error at sample $n$ using the previous unwrapping estimates.

In some embodiments, the phase error estimation is the Linear Minimum Mean-Squared Error (LMMSE) estimate, given as

$$\hat{\xi}_n^{(k)} = \boldsymbol{p}_C^T \boldsymbol{Q}_C^{-1} \left( \boldsymbol{y}_{n-C:n-1} + \widehat{\boldsymbol{u}}_{n-C:n-1}^{(k)} - \hat{f}\boldsymbol{t}_{n-C:n-1} - \hat{\theta} \right).$$

The LMMSE phase error estimate has prediction error variance $\sigma_e^2$. In other embodiments, the phase error can be predicted more quickly but with less accuracy via nearest-neighbor estimation:

$$\hat{\xi}_n^{(k)} = y_{n-1} + \hat{u}_{n-1}^{(k)} - \hat{f}t_{n-1} - \hat{\theta}.$$

The predicted unwrapped phase is then $\tilde{x}_n^{(k)} = \hat{f} t_n + \hat{\theta} + \hat{\xi}_n^{(k)}$ .

Given the predicted phase error, the likelihood for each value of $u_n^{(k)}$ is:

$$p(y_n \mid u_n^{(k)}, \boldsymbol{y}_{n-C:n-1}, \hat{\boldsymbol{u}}_{n-C:n-1}^{(k)}, \hat{f}, \hat{\theta})$$

$$\approx \frac{1}{\sqrt{2\pi\sigma_e^2}} \exp\left\{ -\frac{\left(y_n + u_n^{(k)} - \hat{f} t_n - \hat{\theta} - \hat{\xi}_n^{(k)}\right)^2}{2\sigma_e^2} \right\}.$$

The prediction error variance for the LMMSE estimator is:

$$\sigma_e^2 = \sigma_\eta^2 + \sigma_{\epsilon_2} - \boldsymbol{p}_C^T \boldsymbol{Q}_C^{-1} \boldsymbol{p}_C.$$

The $K$ values of $u_n^{(k)}$ closest to $y_n - \hat{f} t_n - \hat{\theta} - \hat{\xi}_n^{(k)}$, denoted $\tilde{u}_n^{(k,\ell)}, \ell = 1, \ldots, K$, have the largest likelihood and are considered as candidates for the path continuation. The total unwrapping path length (negative log-likelihood) for each candidate $\tilde{u}_n^{(k,\ell)}$ is

$$\tilde{L}_n^{(k,\ell)} = L_{n-1}^{(k)} + \frac{y_n + \tilde{u}_n^{(k,\ell)} - \hat{f} t_n - \hat{\theta} - \hat{\xi}_n^{(k)}}{2\sigma_e^2} + \log(\sigma_e^2).$$

The same process is repeated for all $K$ survivors, resulting in candidate path lengths $\left\{ \tilde{L}_n^{(1,1)}, \ldots, \tilde{L}_n^{(k,\ell)}, \ldots, \tilde{L}_n^{(K,K)} \right\}$. Each of the $K$ existing survivors has $K$ possible unwrapping values $\tilde{u}_n^{(k,\ell)}$, for a maximum of $K^2$ total possible paths. Of these $K^2$ possible paths, only the $K$ most likely (i.e., shortest) paths survive. The $K$ new survivors extend some or all of the previous survivors, and the unwrapping history is updated to $\hat{\boldsymbol{u}}_{1:n}^{(1)}, \ldots, \hat{\boldsymbol{u}}_{1:n}^{(K)}$. For samples $n=1,\ldots,C$, the same procedure holds, except only the previous $n-1$ samples are used for phase error estimation.

After the final sample $n = N$, the most likely unwrapping sequence $\hat{u}_{1:N}$ is the survivor $k$ with the shortest path length $L_N = L_N^{(k)}$. The maximum likelihood unwrapped phase is $\hat{x} = y + \hat{u}_{1:N}$.

Having estimated the maximum likelihood unwrapped phase, the remaining goal is to refine the frequency. FIG. 7C illustrates the process of frequency refinement via linear regression 616 in the frequency estimation algorithm 612, according to some example embodiments. Given $\hat{x} = y + \hat{u}_{1:N}$ and the phase noise statistics, the aim is to estimate the slope $f$ of the line that best explains $\hat{x}$.

Let $\mathbf{1}_N = [1, \ldots, 1]^T$ represent a length-$N$ vector of 1s, $\boldsymbol{t} = [t_1, \ldots, t_N]^T$ represent a length-$N$ vector of time samples, $\boldsymbol{A} = [\boldsymbol{t}, \mathbf{1}_N]$ represent a matrix concatenating the vectors $\boldsymbol{t}$ and $\mathbf{1}_N$, $\beta = [f, \theta]$ represent a vector of parameters to estimate, and $\boldsymbol{Q}_N$ represent the phase error auto-covariance matrix for the length-$N$ sequence. In some embodiments, the matrix inverse $\boldsymbol{Q}_N^{-1}$ may be directly computed numerically. In other embodiments, the matrix inverse $\boldsymbol{Q}_N^{-1}$ may be approximated by first approximating the Toeplitz matrix $\boldsymbol{Q}_N$ as a circulant matrix and then inverting the circulant approximation via the fast Fourier transform algorithm. Linear regression is used to estimate the slope (frequency $f$) and the intercept (phase offset $\theta$) of the line. In some embodiments, linear regression may be performed via generalized least squares estimation (GLS):

$$\widehat{\boldsymbol{\beta}}^{\text{GLS}} = [\hat{f}, \hat{\theta}] = \arg \min_{\boldsymbol{\beta}} \ (\widehat{\boldsymbol{x}} - A\boldsymbol{\beta})^T \boldsymbol{Q}_N^{-1}(\widehat{\boldsymbol{x}} - A\boldsymbol{\beta})$$

$$= (A^T \boldsymbol{Q}_N^{-1} A)^{-1} A^T \boldsymbol{Q}_N^{-1} \widehat{\boldsymbol{x}}.$$

The advantage associated with using GLS is that it provides more accurate update of the frequency and the phase offset of the beat signal. In other embodiments, for faster updating, linear regression may be performed via ordinary least squares, ignoring the phase error statistics to avoid inversion of $\boldsymbol{Q}_N$, i.e.,

$$\widehat{\boldsymbol{\beta}}^{\text{OLS}} = [\hat{f}, \hat{\theta}] = \arg \min_{\boldsymbol{\beta}} \ (\widehat{\boldsymbol{x}} - A\boldsymbol{\beta})^T (\widehat{\boldsymbol{x}} - A\boldsymbol{\beta})$$

$$= (A^T A)^{-1} A^T \widehat{\boldsymbol{x}}.$$

The estimates $\hat{f}$, $\hat{\theta}$ are then used in the subsequent iteration for phase unwrapping.

The frequency estimation algorithm 612 of FIG. 6 continues to alternate between Viterbi phase unwrapping 614 and linear regression 616 until a stopping criteria or termination condition is met. In some embodiments, the stopping criteria may be when the path length increases from iteration $b$-1 to $b$, i.e., $L(b) > L(b - 1)$. In other embodiments, the stopping criteria may be when $b=B$ for some maximum number of iterations $B$. The final frequency estimate 618 is the value of $f$ used in the final iteration.

Some other key aspects of the frequency estimation algorithm 612 of FIG. 6 are described below.

*Initialization:* In some embodiments, the iterative algorithm 612 may be performed for a single pair of initial frequency estimate $\hat{f}_0$ and initial phase offset estimate $\hat{\theta}_0$. In some embodiments, initial frequency estimate $\hat{f}_0$ is the frequency corresponding to the peak of the periodogram of the interference signal. In other embodiments, initial frequency estimate $\hat{f}_0$ is the frequency corresponding to center frequency of a Lorentzian function fit to the power spectral density of the interference signal. In some embodiments, the algorithm may be performed with $M$ initial frequency estimates $\{\hat{f}_0^1, \dots, \hat{f}_0^M\}$ and $M$ initial phase offset estimates $\{\hat{\theta}_0^1, \dots, \hat{\theta}_0^M\}$. Then the final frequency estimate $\hat{f}$ is the one with the shortest unwrapping path over all initializations. In some embodiments, the $M$ initial frequency estimates $\{\hat{f}_0^1, \dots, \hat{f}_0^M\}$ may be linearly spaced frequencies on a grid. In other embodiments, the M initial frequency estimates $\{\hat{f}_0^1, \dots, \hat{f}_0^M\}$ may be random and uniformly distributed frequencies. In other embodiments, the $M$ initial frequency estimates $\{\hat{f}_0^1, \dots, \hat{f}_0^M\}$ include the results of alternative frequency estimation techniques, including the peak of the periodogram of the interference signal or the center frequency of a Lorentzian function fit to the power spectral density of the interference signal.

*Noise Statistics:* In some embodiments the laser phase noise $\phi_n$ may be dominated by spontaneous emission, so the frequency noise $\omega_n = d\phi_n/dt$ is assumed to be white and Gaussian. The frequency noise may have a constant PSD $\mathcal{S}_\omega(\omega) = \Delta\omega$, where $\Delta v = \Delta\omega/(2\pi)$ is the full-width at half-maximum laser linewidth in Hz, and is assumed to be known. In such scenarios, the phase noise is a Wiener process. For a fixed delay $\tau$, the resulting phase change $\Delta\phi_n(t; \tau)$ is a zero-mean, stationary Gaussian process with triangular autocorrelation function

$$\mathcal{R}_{\Delta\phi_n}(t; \tau) = \Delta_\omega(\tau - |t|)\text{rect}\left(\frac{t}{2\tau}\right).$$

In other embodiments, the laser phase noise $\phi_n$ may be affected by the wavelength sweep of the laser emitter. As a result, the frequency noise may be colored, not white. In some embodiments, the frequency noise may have a first-order low-pass transfer function with Power Spectral Density given by:

$$\mathcal{S}_{\Delta\phi_{\mathrm{n}}}(\omega;\tau) = \alpha_\omega \tau^2 \mathrm{sinc}^2\left(\frac{\omega\tau}{2}\right)\frac{1}{1 + \left(\frac{\omega}{\omega_1}\right)^2},$$

where $\alpha_\omega$ is a scaling parameter and $\omega_1$ is the cutoff frequency. Then the phase change PSD is

$$\mathcal{R}_{\Delta\phi_n}(t;\tau)$$

$$= \frac{\alpha_\omega}{\omega_1}\begin{cases}(\tau - |u|)\omega_1 - \exp(-\omega_1|u|) + \exp(-\omega_1\tau\cosh(\omega_1|u|), & 0 \le |u| < \tau \\ \exp(-\omega_1|u|)\left[\cosh(\omega_1\tau) - 1\right], & |u| \ge \tau\end{cases}.$$

In some embodiments, the PSD may have a second-order low-pass transfer function with PSD

$$\mathcal{S}_{\Delta\phi_{\mathrm{n}}}(\omega;\tau) = \alpha_\omega \tau^2 \mathrm{sinc}^2\left(\frac{\omega\tau}{2}\right)\frac{\omega_2^4}{\omega_2^4 + \omega^2\omega_2^2\left(\frac{1}{q^2} - 2\right) + \omega^4},$$

where $\alpha_\omega$ is a scaling parameter and $\omega_2$ is the cutoff frequency, and $q$ is the quality factor. In other embodiments, the frequency noise has multiple sources, including white noise and flicker ($1/f$) noise.

*Additive Observation Phase Noise*

Given the measured signal magnitudes $|r_n|$, the scaled AOPN term $2\pi\,\varepsilon_n$ has a zero-mean von Mises distribution with a complicated dependence on a, $|r_n|$, and $\sigma_w^2$. The AOPN variance can be approximated as

$$\sigma_\epsilon^2 \approx \min\left\{\frac{\sigma_w^2}{\frac{2(2\pi)^2}{N}\sum_{n=0}^{N-1}|r_n|^2}, \frac{1}{12}\right\}$$

FIG. 8 illustrates a scenario depicting an example use case of an FMCW lidar system, according to some example embodiments. A vehicle 802 moving on a road link 804 may be connected to a base station 806. The road link may have one or more obstacles 808 and the goal may be to traverse the road link 804 without colliding with the obstacles 808. Towards this end, it is required that a correct estimation of the depth/range of the obstacles 808 be determined so that a route for the vehicle 802 may be planned so as to avoid the obstacles 808.

The vehicle 802 may be a manually driven vehicle, a semi-autonomous vehicle or a fully autonomous self-driving vehicle and may be configured for communication with the base station 806. In this regard, the vehicle 802 may be equipped with suitable components to execute remote sensing, data communication, and data processing. Towards this end, it may be contemplated that the vehicle may be equipped with an onboard FMCW lidar system such as the ones described earlier. An emitter of the lidar system transmits a wave or beam of radiation (shown as solid line) towards the obstacles 808 and receives a reflection (shown as dotted line) of the transmitted wave/beam from the scene ahead. Since the vehicle 802 may be moving and/or due to errors in the source laser, the depth estimation of the obstacles 808 may not be correctly inferable using conventional techniques.

The vehicle 802 may invoke the FMCW lidar system to perform accurate depth estimation for the obstacles 808. The FMCW lidar system may fully or partially be onboard the vehicle 802. In embodiments where the FMCW lidar system is partially onboard the vehicle 802, the computation steps leading to frequency estimation may be performed via edge computing on the base station 806. In some example embodiments, the vehicle 802 may determine through the FMCW lidar system, the correct range of the obstacles 808 and thereby determine a geo-location of the obstacles 808. Accordingly, the onboard controller of the vehicle 808 may reroute the vehicle 808 to avoid collision with the obstacles 808. In some example embodiments, the vehicle 802 may additionally or alternately convey at least the geo-location of the obstacles 808 to the base station 806 for updating a map of the area in which the road link 804 exists.

Although the example use case is described with reference to an on-road vehicle, example embodiments described herein may be applicable to any type of vehicle such as an aerial vehicle, an aquatic vehicle, a spacecraft, and the like. Other example uses of some embodiments include industrial robotics, computer vision systems and autonomous driving.

FIG. 9 illustrates a block diagram of a system for implementing an FMCW lidar system, according to some example embodiments. The controller 911 includes a processor 940, a computer readable memory 912, storage 958 and user interface 949 with optional display 952 and keyboard 951, which are connected through bus 956. For example, the user interface 964 in communication with the processor 940 and the computer readable memory 912, acquires and stores the image data in the computer readable memory 912 upon receiving an input from a surface, keyboard 953, of the user interface 957 by a user.

The computer 911 can include a power source 954, depending upon the application the power source 954 may be optionally located outside of the computer 911. Linked through bus 956 can be a user input interface 957 adapted to connect to a display device 948, wherein the display device 948 can include a computer monitor, camera, television, projector, or mobile device, among others. A network interface controller (NIC) 934 is adapted to connect through the bus 956 to a network 936, wherein image data or other data, among other things, can be rendered on a third-party display device, third party imaging device, and/or third-party printing device outside of the computer 911.

Still referring to FIG. 9, the image data or other electronic data, among other things, may be transmitted over a communication channel of the network 936, and/or stored within the storage system 958 for storage and/or further processing. Further, the time series data or other data may be received wirelessly or hard wired from a receiver 946 (or external receiver 938) or transmitted via a transmitter 947 (or external transmitter 939) wirelessly or hard wired, the receiver 946 and transmitter 947 are both connected through the bus 956. The computer 911 may be connected via an input interface 908 to external sensing devices 944 and external input/output devices 941. For example, the external sensing devices 904 may include sensors gathering data before-during-after of the collected time-series data of the machine. The computer 911 may be connected to other external computers 942. An output interface 909 may be used to output the processed data from the processor 940. It is noted that a user interface 949 in communication with the processor 940 and the non-transitory computer readable storage medium 912, acquires and stores the region data in the non-transitory computer readable storage medium 912 upon receiving an input from a surface of the user interface 949 by a user.

The above description provides exemplary embodiments only, and is not intended to limit the scope, applicability, or configuration of the disclosure. Rather, the following description of the exemplary embodiments will provide those skilled in the art with an enabling description for implementing one or more exemplary embodiments.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements. Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks. Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

**Claims**

1. A frequency modulation continuous wave, FMCW, device, comprising:

   an emitter (102, 202) configured to transmit at least one wave of radiation to a scene, wherein the transmitted wave is modulated in frequency domain using linear modulation that is subject to impairments causing a non-linearity of the transmitted wave in the frequency domain;
   a receiver (108, 208) configured to receive a reflection of the transmitted wave from the scene;
   a mixer (110, 210) operatively connected to the emitter (102, 202) and the receiver (110, 210) and configured to interfere a copy of the transmitted wave with the received reflection of the transmitted wave to generate a beat signal;
   an analog-to-digital converter, ADC, (112, 212A, 212B) operatively connected to the mixer (110, 210) and configured to generate a sequence of samples of the beat signal with wrapped phases (604) in time domain; and
   **characterized by** further comprising: a processor (114, 214) configured to estimate, iteratively until a termination condition is met, a frequency (610, 618) of the beat signal in the time domain based on 1) phase unwrapping (614) of the samples of the beat signal subject to correlated phase error derived from phase noise statistics (606) of the emitter (102, 202) and 2) a linear regression (616) fitting the frequency of the beat signal into unwrapped phases of the beat signal.

2. The FMCW device of claim 1, wherein to perform a current iteration of the estimation, the processor (114, 214) is configured to

   determine, for each sample of the sequence of samples of the beat signal, a current phase error and a phase unwrapping number fitting a previous frequency of the beat signal and a previous phase offset of the beat signal determined during a previous iteration, wherein the current phase error for a current sample in the sequence of the beat signal is correlated with a previous phase error for a previous sample in the sequence of the beat signal by predetermined phase noise statistics (606); and
   update a current frequency of the beat signal and a current phase offset of the beat signal for the current iteration based on the determined current phase error and the determined phase unwrapping number.

3. The FMCW device of claim 2, wherein the processor (114, 214) is configured to estimate iteratively, the frequency (610, 618) of the beat signal in the time domain, using an alternative optimization that includes a Viterbi algorithm determining the current phase error and the phase unwrapping number probabilistically to maximize a likelihood of their fitting in the entire sequence of samples of the beat signal,
   and in particular wherein further one of a) to d) is provided:

   a) wherein the alternative optimization updates the frequency of the beat signal and the phase offset of the beat signal using a generalized least squares (GLS) regression; or
   b) wherein the alternative optimization updates the frequency of the beat signal and the phase offset of the beat signal using via least squares regression; or
   c) wherein the termination condition compares a likelihood given by the Viterbi algorithm with a threshold; or
   d) wherein, for each current sample of the sequence of samples of the beat signal, the Viterbi algorithm uses the previous phase errors and the previous phase unwrapping number determined for the previous samples for causal estimation of a current phase error and a current phase unwrapping number, in particular wherein the causal estimation of the current phase error and the current phase unwrapping number are determined via a linear minimum mean squared error estimation.

4. The FMCW device of claim 1, wherein the phase noise statistics (606) include the autocorrelation function of the emitter (102, 202) phase noise and the autocorrelation function of the receiver additive noise.

5. The FMCW device of claim 1, wherein the termination condition is a number of iterations.

6. The FMCW device of claim 1, wherein the processor (114, 214) is further configured to estimate a distance to an object (106, 206, 808) in the scene, based on the estimated frequency of the beat signal.

7. A Lidar including the FMCW device of claim 1.

8. A Lidar including the FMCW device of claim 6, wherein the emitter (102, 202) includes a laser source with a coherence length shorter than the distance to the object (106, 206, 808).

9. A frequency estimation method utilizing a frequency modulation continuous wave, FMCW, device, comprising: transmitting (301), at least one wave of radiation to a scene, wherein the transmitted wave is modulated by an emitter (102, 202) in a frequency domain using linear modulation that is subject to impairments causing a non-linearity of the transmitted wave in the frequency domain;

    receiving (303) a reflection of the transmitted wave from the scene;
    interfering (305) a copy of the transmitted wave with the received reflection of the transmitted wave to generate a beat signal;
    generating (307) a sequence of samples of the beat signal with wrapped phases (604) in time domain; and
    **characterized by** further comprising: estimating (309), iteratively until a termination condition is met, a frequency (610, 618) of the beat signal in the time domain based on 1) phase unwrapping (614) of the samples of the beat signal subject to correlated phase error derived from phase noise statistics (606) of the emitter (102, 202) and 2) a linear regression (616) fitting the frequency of the beat signal into unwrapped phases of the beat signal.

10. The frequency estimation method of claim 9, wherein a current iteration of the frequency estimation comprises:

    determining (403), for each sample of the sequence of samples of the beat signal, a current phase error and a phase unwrapping number fitting a previous frequency of the beat signal and a previous phase offset of the beat signal determined during a previous iteration, wherein the current phase error for a current sample in the sequence of the beat signal is correlated with a previous phase error for a previous sample in the sequence of the beat signal by predetermined phase noise statistics (606); and
    updating (405) a current frequency of the beat signal and a current phase offset of the beat signal for the current iteration, based on the determined current phase error and the determined phase unwrapping number.

11. The frequency estimation method of claim 10, wherein the iterative estimation of the frequency (610, 618) of the beat signal in the time domain is based on an alternative optimization that includes a Viterbi algorithm determining the current phase error and the phase unwrapping number probabilistically to maximize a likelihood of their fitting in the entire sequence of samples of the beat signal.

12. The frequency estimation method of claim 11, wherein, for each current sample of the sequence of samples of the beat signal, the Viterbi algorithm uses the previous phase errors and the previous phase unwrapping number determined for the previous samples for causal estimation of a current phase error and a current phase unwrapping number.

13. The frequency estimation method of claim 12, wherein the alternative optimization updates the frequency of the beat signal and the phase offset of the beat signal using a generalized least squares (GLS) regression.

14. The frequency estimation method of claim 10, wherein the alternative optimization updates the frequency of the beat signal and the phase offset of the beat signal using least squares regression.

15. A non-transitory computer-readable medium having stored thereon instructions executable by a computer for controlling a frequency modulation continuous wave, FMCW, device to perform a frequency estimation method, the frequency estimation method comprising:

    transmitting at least one wave of radiation to a scene, wherein the transmitted wave is modulated by an emitter (102, 202) in frequency domain using linear modulation that is subject to impairments causing a non-linearity of the transmitted wave in the frequency domain;
    receiving a reflection of the transmitted wave from the scene;
    interfering a copy of the transmitted wave with the received reflection of the transmitted wave to generate a beat signal;
    generating a sequence of samples of the beat signal with wrapped phases (604) in a time domain; and
    **characterized by** further comprising: estimating, iteratively until a termination condition is met, a frequency (610, 618) of the beat signal in the time domain based on 1) phase unwrapping (614) of the samples of the beat signal subject to correlated phase error derived from phase noise statistics (606) of the emitter (102, 202) and 2) a linear regression (616) fitting the frequency of the beat signal into the unwrapped phases of the beat signal.

**Patentansprüche**

1. Frequenzmodulierte Dauerstrich, FMCW, -Einrichtung, umfassend:

   einen Sender (102, 202), der eingerichtet ist, mindestens eine Strahlungswelle zu einer Szene zu übertragen, wobei die übertragene Welle in einem Frequenzbereich unter Verwendung einer linearen Modulation moduliert wird, die Beeinträchtigungen unterliegt, die eine Nichtlinearität der übertragenen Welle im Frequenzbereich verursachen;
   einen Empfänger (108, 208), der eingerichtet ist, eine Reflexion der übertragenen Welle von der Szene zu empfangen;
   einen Mischer (110, 210), der betriebsmäßig mit dem Sender (102, 202) und dem Empfänger (110, 210) verbunden ist und eingerichtet ist, eine Kopie der übertragenen Welle mit der empfangenen Reflexion der übertragenen Welle zu interferieren, um ein Schwebungssignal zu erzeugen;
   einen Analog-Digital-Wandler, ADC, (112, 212A, 212B), der betriebsmäßig mit dem Mischer (110, 210) verbunden ist und eingerichtet ist, eine Folge von Abtastwerten des Schwebungssignals mit gefalteten Phasen (604) im Zeitbereich zu erzeugen; und
   **dadurch gekennzeichnet, dass** sie ferner umfasst: einen Prozessor (114, 214), der eingerichtet ist, iterativ, bis eine Abbruchbedingung erfüllt ist, eine Frequenz (610, 618) des Schwebungssignals im Zeitbereich auf der Grundlage von 1) Phasen-Entfaltung (614) der Abtastwerte des Schwebungssignals in Abhängigkeit von einem korrelierten Phasenfehler, der aus einer Phasenrauschstatistik (606) des Senders (102, 202) abgeleitet ist, und 2) einer linearen Regression (616), die die Frequenz des Schwebungssignals an die entfalteten Phasen des Schwebungssignals anpasst, zu ermitteln.

2. FMCW-Einrichtung nach Anspruch 1, wobei zur Durchführung einer aktuellen Iteration der Ermittlung der Prozessor (114, 214) eingerichtet ist zum

   Bestimmen, für jeden Abtastwert der Folge von Abtastwerten des Schwebungssignals, eines aktuellen Phasenfehlers und einer Phasen-Entfaltungs-Zahl, die zu einer vorherigen Frequenz des Schwebungssignals und einem vorherigen Phasenversatz des Schwebungssignals passen, die während einer vorherigen Iteration bestimmt werden, wobei der aktuelle Phasenfehler für einen aktuellen Abtastwert in der Folge des Schwebungssignals mit einem vorherigen Phasenfehler für einen vorherigen Abtastwert in der Folge des Schwebungssignals durch eine vorbestimmte Phasenrauschstatistik (606) korreliert wird; und
   Aktualisieren einer aktuellen Frequenz des Schwebungssignals und eines aktuellen Phasenversatzes des Schwebungssignals für die aktuelle Iteration auf der Grundlage des bestimmten aktuellen Phasenfehlers und der bestimmten Phasen-Entfaltungs-Zahl.

3. FMCW-Einrichtung nach Anspruch 2, wobei der Prozessor (114, 214) eingerichtet ist, iterativ die Frequenz (610, 618) des Schwebungssignals im Zeitbereich unter Verwendung einer alternativen Optimierung zu ermitteln, die einen Viterbi-Algorithmus umfasst, der den aktuellen Phasenfehler und die Phasen-Entfaltungs-Zahl probabilistisch bestimmt, um eine Wahrscheinlichkeit ihrer Anpassung in der gesamten Folge von Abtastwerten des Schwebungssignals zu maximieren,
   und wobei insbesondere ferner eines von a) bis d) vorgesehen ist:

   a) wobei die alternative Optimierung die Frequenz des Schwebungssignals und den Phasenversatz des Schwebungssignals unter Verwendung einer verallgemeinerten Regression der kleinsten Quadrate (GLS) aktualisiert; oder
   b) wobei die alternative Optimierung die Frequenz des Schwebungssignals und den Phasenversatz des Schwebungssignals unter Verwendung einer Regression der kleinsten Quadrate aktualisiert; oder
   c) wobei die Abbruchbedingung eine durch den Viterbi-Algorithmus gegebene Wahrscheinlichkeit mit einem Schwellenwert vergleicht; oder
   d) wobei der Viterbi-Algorithmus für jeden aktuellen Abtastwert der Folge von Abtastwerten des Schwebungssignals die für die vorherigen Abtastwerte bestimmten vorherigen Phasenfehler und die vorherige Phasen-Entfaltungs-Zahl für eine kausale Ermittlung eines aktuellen Phasenfehlers und einer aktuellen Phasen-Entfaltungs-Zahl verwendet, wobei insbesondere die kausale Ermittlung des aktuellen Phasenfehlers und der aktuellen Phasen-Entfaltungs-Zahl über eine lineare Ermittlung des minimalen mittleren quadratischen Fehlers bestimmt wird.

4. FMCW-Einrichtung nach Anspruch 1, wobei die Phasenrauschstatistik (606) die Autokorrelationsfunktion des Phasenrauschens des Senders (102, 202) und die Autokorrelationsfunktion des additiven Rauschens des Empfängers aufweist.

5. FMCW-Einrichtung nach Anspruch 1, wobei die Abbruchbedingung eine Anzahl von Iterationen ist.

6. FMCW-Einrichtung nach Anspruch 1, wobei der Prozessor (114, 214) ferner eingerichtet ist, auf der Grundlage der ermittelten Frequenz des Schwebungssignals eine Entfernung zu einem Objekt (106, 206, 808) in der Szene zu ermitteln.

7. Lidar, aufweisend die FMCW-Einrichtung nach Anspruch 1.

8. Lidar, aufweisend die FMCW-Einrichtung nach Anspruch 6, wobei der Sender (102, 202) eine Laserquelle mit einer Kohärenzlänge aufweist, die kürzer ist als die Entfernung zu dem Objekt (106, 206, 808).

9. Frequenzermittlungsverfahren, das eine frequenzmodulierte Dauerstrich, FMCW, -Einrichtung verwendet, umfassend:

Übertragen (301) mindestens einer Strahlungswelle zu einer Szene, wobei die übertragene Welle durch einen Sender (102, 202) im Frequenzbereich unter Verwendung einer linearen Modulation moduliert wird, die Beeinträchtigungen unterliegt, die eine Nichtlinearität der übertragenen Welle im Frequenzbereich verursachen;
Empfangen (303) einer Reflexion der übertragenen Welle von der Szene;
Interferieren (305) einer Kopie der übertragenen Welle mit der empfangenen Reflexion der übertragenen Welle, um ein Schwebungssignal zu erzeugen;
Erzeugen (307) einer Folge von Abtastwerten des Schwebungssignals mit gefalteten Phasen (604) im Zeitbereich; und
**dadurch gekennzeichnet, dass** es ferner umfasst: iterativ Ermitteln (309), bis eine Abbruchbedingung erfüllt ist, einer Frequenz (610, 618) des Schwebungssignals im Zeitbereich auf der Grundlage von 1) Phasen-Entfaltung (614) der Abtastwerte des Schwebungssignals in Abhängigkeit von einem korrelierten Phasenfehler, der aus einer Phasenrauschstatistik (606) des Senders (102, 202) abgeleitet ist, und 2) einer linearen Regression (616), die die Frequenz des Schwebungssignals an die entfalteten Phasen des Schwebungssignals anpasst.

10. Frequenzermittlungsverfahren nach Anspruch 9, wobei eine aktuelle Iteration der Frequenzermittlung umfasst:

Bestimmen (403), für jeden Abtastwert der Folge von Abtastwerten des Schwebungssignals, eines aktuellen Phasenfehlers und einer Phasen-Entfaltungs-Zahl, die zu einer vorherigen Frequenz des Schwebungssignals und einem vorherigen Phasenversatz des Schwebungssignals passen, die während einer vorherigen Iteration bestimmt werden, wobei der aktuelle Phasenfehler für einen aktuellen Abtastwert in der Folge des Schwebungssignals mit einem vorherigen Phasenfehler für einen vorherigen Abtastwert in der Folge des Schwebungssignals durch eine vorbestimmte Phasenrauschstatistik (606) korreliert wird; und
Aktualisieren (405) einer aktuellen Frequenz des Schwebungssignals und eines aktuellen Phasenversatzes des Schwebungssignals für die aktuelle Iteration auf der Grundlage des bestimmten aktuellen Phasenfehlers und der bestimmten Phasen-Entfaltungs-Zahl.

11. Frequenzermittlungsverfahren nach Anspruch 10, wobei die iterative Ermittlung der Frequenz (610, 618) des Schwebungssignals im Zeitbereich auf einer alternativen Optimierung basiert, die einen Viterbi-Algorithmus umfasst, der den aktuellen Phasenfehler und die Phasen-Entfaltungs-Zahl probabilistisch bestimmt, um eine Wahrscheinlichkeit ihrer Anpassung in der gesamten Folge von Abtastwerten des Schwebungssignals zu maximieren.

12. Frequenzermittlungsverfahren nach Anspruch 11, wobei der Viterbi-Algorithmus für jeden aktuellen Abtastwert der Folge von Abtastwerten des Schwebungssignals die für die vorherigen Abtastwerte bestimmten vorherigen Phasenfehler und die vorherige Phasen-Entfaltungs-Zahl für eine kausale Ermittlung eines aktuellen Phasenfehlers und einer aktuellen Phasen-Entfaltungs-Zahl verwendet.

**13.** Frequenzermittlungsverfahren nach Anspruch 12, wobei die alternative Optimierung die Frequenz des Schwebungssignals und den Phasenversatz des Schwebungssignals unter Verwendung einer verallgemeinerten Regression der kleinsten Quadrate (GLS) aktualisiert.

**14.** Frequenzermittlungsverfahren nach Anspruch 10, wobei die alternative Optimierung die Frequenz des Schwebungssignals und den Phasenversatz des Schwebungssignals unter Verwendung einer Regression der kleinsten Quadrate aktualisiert.

**15.** Nicht-transitorisches computerlesbares Medium, auf dem Befehle gespeichert sind, die von einem Computer ausgeführt werden können, um eine frequenzmodulierte Dauerstrich, FMCW, -Einrichtung zu steuern, um ein Frequenzermittlungsverfahren durchzuführen, wobei das Frequenzermittlungsverfahren umfasst:

Übertragen mindestens einer Strahlungswelle zu einer Szene, wobei die übertragene Welle durch einen Sender (102, 202) in einem Frequenzbereich unter Verwendung einer linearen Modulation moduliert wird, die Beeinträchtigungen unterliegt, die eine Nichtlinearität der übertragenen Welle im Frequenzbereich verursachen;
Empfangen einer Reflexion der übertragenen Welle von der Szene;
Interferieren einer Kopie der übertragenen Welle mit der empfangenen Reflexion der übertragenen Welle, um ein Schwebungssignal zu erzeugen;
Erzeugen einer Folge von Abtastwerten des Schwebungssignals mit gefalteten Phasen (604) in einem Zeitbereich; und
**dadurch gekennzeichnet, dass** es ferner umfasst: iterativ Ermitteln, bis eine Abbruchbedingung erfüllt ist, einer Frequenz (610, 618) des Schwebungssignals im Zeitbereich auf der Grundlage von 1) Phasen-Entfaltung (614) der Abtastwerte des Schwebungssignals in Abhängigkeit von einem korrelierten Phasenfehler, der aus einer Phasenrauschstatistik (606) des Senders (102, 202) abgeleitet ist, und 2) einer linearen Regression (616), die die Frequenz des Schwebungssignals an die entfalteten Phasen des Schwebungssignals anpasst.

**Revendications**

**1.** Dispositif à onde continue à modulation de fréquence, FMCW, comprenant :

un émetteur (102, 202) configuré pour transmettre au moins une onde de rayonnement à une scène, dans lequel l'onde transmise est modulée dans le domaine fréquentiel en utilisant une modulation linéaire qui est sujette à des altérations provoquant une non-linéarité de l'onde transmise dans le domaine fréquentiel ;
un récepteur (108, 208) configuré pour recevoir une réflexion de l'onde transmise depuis la scène ;
un mélangeur (110, 210) connecté de manière opérationnelle à l'émetteur (102, 202) et au récepteur (110, 210) et configuré pour interférer une copie de l'onde transmise avec la réflexion reçue de l'onde transmise pour générer un signal de battement ;
un convertisseur analogique-numérique, CAN, (112, 212A, 212B) connecté de manière opérationnelle au mélangeur (110, 210) et configuré pour générer une séquence d'échantillons du signal de battement avec des phases enroulées (604) dans le domaine temporel ; et
**caractérisé en ce qu'**il comprend en outre : un processeur (114, 214) configuré pour estimer, de manière itérative jusqu'à ce qu'une condition de fin soit satisfaite, une fréquence (610, 618) du signal de battement dans le domaine temporel sur la base de 1) un déroulement de phase (614) des échantillons du signal de battement soumis à une erreur de phase corrélée dérivée de statistiques de bruit de phase (606) de l'émetteur (102, 202) et 2) une régression linéaire (616) ajustant la fréquence du signal de battement aux phases déroulées du signal de battement.

**2.** Dispositif FMCW selon la revendication 1, dans lequel pour effectuer une itération actuelle de l'estimation, le processeur (114, 214) est configuré pour

déterminer, pour chaque échantillon de la séquence d'échantillons du signal de battement, une erreur de phase actuelle et un nombre de déroulements de phase correspondant à une fréquence précédente du signal de battement et à un décalage de phase précédent du signal de battement déterminé au cours d'une itération précédente, dans lequel l'erreur de phase actuelle pour un échantillon actuel dans la séquence du signal de battement est corrélée avec une erreur de phase précédente pour un échantillon précédent dans la séquence du signal de battement par des statistiques de bruit de phase prédéterminées (606) ; et
mettre à jour une fréquence actuelle du signal de battement et un décalage de phase actuel du signal de battement pour l'itération actuelle sur la base de l'erreur de phase actuelle déterminée et du nombre de déroulements de phase déterminé.

3. Dispositif FMCW selon la revendication 2, dans lequel le processeur (114, 214) est configuré pour estimer de manière itérative la fréquence (610, 618) du signal de battement dans le domaine temporel, en utilisant une optimisation alternative qui inclut un algorithme de Viterbi déterminant l'erreur de phase actuelle et le nombre de déroulements de phase de manière probabiliste pour maximiser une probabilité de leur ajustement dans la séquence entière d'échantillons du signal de battement,
et en particulier dans lequel en outre l'un de a) à d) est fourni :

a) dans lequel l'optimisation alternative met à jour la fréquence du signal de battement et le décalage de phase du signal de battement en utilisant une régression des moindres carrés généralisés (GLS) ; ou
b) dans lequel l'optimisation alternative met à jour la fréquence du signal de battement et le décalage de phase du signal de battement en utilisant la régression des moindres carrés ; ou
c) dans lequel la condition de fin compare une probabilité donnée par l'algorithme de Viterbi à un seuil ; ou
d) dans lequel, pour chaque échantillon actuel de la séquence d'échantillons du signal de battement, l'algorithme de Viterbi utilise les erreurs de phase précédentes et le nombre de déroulements de phase précédent déterminé pour les échantillons précédents pour une estimation causale d'une erreur de phase actuelle et d'un nombre de déroulements de phase actuel, en particulier dans lequel l'estimation causale de l'erreur de phase actuelle et le nombre de déroulements de phase actuel sont déterminés via une estimation linéaire à erreur quadratique moyenne minimale.

4. Dispositif FMCW selon la revendication 1, dans lequel les statistiques de bruit de phase (606) incluent la fonction d'auto-corrélation du bruit de phase de l'émetteur (102, 202) et la fonction d'auto-corrélation du bruit additif du récepteur.

5. Dispositif FMCW selon la revendication 1, dans lequel la condition de fin est un nombre d'itérations.

6. Dispositif FMCW selon la revendication 1, dans lequel le processeur (114, 214) est en outre configuré pour estimer une distance par rapport à un objet (106, 206, 808) dans la scène, sur la base de la fréquence estimée du signal de battement.

7. Lidar incluant le dispositif FMCW selon la revendication 1.

8. Lidar incluant le dispositif FMCW selon la revendication 6, dans lequel l'émetteur (102, 202) inclut une source laser avec une longueur de cohérence inférieure à la distance par rapport à l'objet (106, 206, 808).

9. Procédé d'estimation de fréquence utilisant un dispositif à onde continue à modulation de fréquence, FMCW, comprenant les étapes consistant à :

transmettre (301) au moins une onde de rayonnement à une scène, dans lequel l'onde transmise est modulée par un émetteur (102, 202) dans un domaine fréquentiel en utilisant une modulation linéaire qui est sujette à des altérations provoquant une non-linéarité de l'onde transmise dans le domaine fréquentiel ;
recevoir (303) une réflexion de l'onde transmise depuis la scène ;
interférer (305) une copie de l'onde transmise avec la réflexion reçue de l'onde transmise pour générer un signal de battement ;
générer (307) une séquence d'échantillons du signal de battement avec des phases enroulées (604) dans le domaine temporel ; et
**caractérisé en ce qu'**il comprend en outre l'étape consistant à : estimer (309), de manière itérative jusqu'à ce qu'une condition de fin soit satisfaite, une fréquence (610, 618) du signal de battement dans le domaine temporel sur la base de 1) un déroulement de phase (614) des échantillons du signal de battement soumis à une erreur de phase corrélée dérivée de statistiques de bruit de phase (606) de l'émetteur (102, 202) et 2) une régression linéaire (616) ajustant la fréquence du signal de battement dans des phases déroulées du signal de battement.

10. Procédé d'estimation de fréquence selon la revendication 9, dans lequel une itération actuelle de l'estimation de fréquence comprend les étapes consistant à :

déterminer (403), pour chaque échantillon de la séquence d'échantillons du signal de battement, une erreur de phase actuelle et un nombre de déroulements de phase correspondant à une fréquence précédente du signal de battement et à un décalage de phase précédent du signal de battement déterminé au cours d'une itération précédente, dans lequel l'erreur de phase actuelle pour un échantillon actuel dans la séquence du signal de battement est corrélée avec une erreur de phase précédente pour un échantillon précédent dans la séquence du signal de battement par des statistiques de bruit de phase prédéterminées (606) ; et

mettre à jour (405) une fréquence actuelle du signal de battement et un décalage de phase actuel du signal de battement pour l'itération actuelle sur la base de l'erreur de phase actuelle déterminée et du nombre de déroulements de phase déterminé.

11. Procédé d'estimation de fréquence selon la revendication 10, dans lequel l'estimation itérative de la fréquence (610, 618) du signal de battement dans le domaine temporel est basée sur une optimisation alternative qui comprend un algorithme de Viterbi déterminant l'erreur de phase actuelle et le nombre de déroulements de phase de manière probabiliste pour maximiser une probabilité de leur ajustement dans la séquence entière d'échantillons du signal de battement.

12. Procédé d'estimation de fréquence selon la revendication 11, dans lequel, pour chaque échantillon actuel de la séquence d'échantillons du signal de battement, l'algorithme de Viterbi utilise les erreurs de phase précédentes et le nombre de déroulements de phase précédent déterminés pour les échantillons précédents pour une estimation causale d'une erreur de phase actuelle et d'un nombre de déroulements de phase actuelle.

13. Procédé d'estimation de fréquence selon la revendication 12, dans lequel l'optimisation alternative met à jour la fréquence du signal de battement et le décalage de phase du signal de battement en utilisant une régression des moindres carrés généralisés (GLS).

14. Procédé d'estimation de fréquence selon la revendication 10, dans lequel l'optimisation alternative met à jour la fréquence du signal de battement et le décalage de phase du signal de battement en utilisant une régression des moindres carrés.

15. Support lisible par ordinateur non transitoire sur lequel sont stockées des instructions exécutables par un ordinateur pour commander un dispositif à onde continue à modulation de fréquence, FMCW, pour mettre en œuvre un procédé d'estimation de fréquence, le procédé d'estimation de fréquence comprenant les étapes consistant à :

transmettre au moins une onde de rayonnement à une scène, dans lequel l'onde transmise est modulée par un émetteur (102, 202) dans un domaine fréquentiel en utilisant une modulation linéaire qui est sujette à des altérations provoquant une non-linéarité de l'onde transmise dans le domaine fréquentiel ;

recevoir une réflexion de l'onde transmise depuis la scène ;

interférer une copie de l'onde transmise avec la réflexion reçue de l'onde transmise pour générer un signal de battement ;

générer une séquence d'échantillons du signal de battement avec des phases enroulées (604) dans un domaine temporel ; et

**caractérisé en ce qu'**il comprend en outre l'étape consistant à : estimer, de manière itérative jusqu'à ce qu'une condition de fin soit satisfaite, une fréquence (610, 618) du signal de battement dans le domaine temporel sur la base de 1) un déroulement de phase (614) des échantillons du signal de battement soumis à une erreur de phase corrélée dérivée de statistiques de bruit de phase (606) de l'émetteur (102, 202) et 2) une régression linéaire (616) ajustant la fréquence du signal de battement dans des phases déroulées du signal de battement.

# FIG.1A

# FIG.1B

**104**  **102**  **100B**

Transmitter ← Emitter

**116** — Memory

Object **106**

**112**

Receiver → Mixer → ADC → Processor → Distance estimate

**108**  **110**  **114**  **118**

– – – Optical signal  —— Electrical signal  ········ Digital signal

EP 4 460 711 B1

FIG.2A

FIG.2B

# FIG.2C

**250**

| Component | Process |
|---|---|
| Emitter 102 | Split incident light into a local beam and a transmission beam — 3 |
| Transmitter 104 | Transmit the transmission beam — 5 |
| Receiver 108 | Receive a reflected beam from the scene — 7 |
| Mixer 110 | Interfere the received beam reflected from the scene with the local beam to produce an interference pattern — 9 |
| ADC 112 | Sample the interference pattern at linearly-spaced frequencies — 11 |
| Processor 114 / Memory 116 | Determine the distance to the object through joint phase unwrapping and linear regression of the phase extracted from the interference samples — 13 |
| Interface 120 | Output distance measurement to the object — 15 |

EP 4 460 711 B1

# FIG.3

300

Transmitting at least one wave of radiation to a scene — 301

Receiving a reflection of the transmitted wave from the scene — 303

Interfering a copy of the transmitted wave with the received reflection of the transmitted wave to generate a beat signal — 305

Generating a sequence of samples of the beat signal with wrapped phases in a time domain — 307

Estimating, iteratively until a termination condition is met, a frequency of the beat signal in the time domain — 309

FIG.4

400

```
┌─────────────────────────────────────────────────────────┐
│  obtain previous frequency and previous phase offset      │    401
│  of the beat signal determined during a previous          │
│  iteration                                                │
└─────────────────────────────────────────────────────────┘
                            │
                            ▼
┌─────────────────────────────────────────────────────────┐
│  determine, for each sample of the sequence of samples    │
│  of the beat signal, a current phase error and a phase    │    403
│  unwrapping number fitting the previous frequency of      │
│  the beat signal and the previous phase offset of the     │
│  beat signal determined during the previous               │
│  iteration                                                │
└─────────────────────────────────────────────────────────┘
                            │
                            ▼
┌─────────────────────────────────────────────────────────┐
│  update a current frequency of the beat signal and a      │    405
│  current phase offset of the beat signal for the          │
│  current iteration                                        │
└─────────────────────────────────────────────────────────┘
```

EP 4 460 711 B1

## FIG.5

**Algorithm 1** Viterbi Unwrapping Frequency Estimation　　　　　　⟵ 500

**Input:** y, $\{f_0^{(0)}, \ldots, f_{M-1}^{(0)}\}$, $\{\theta_0^{(0)}, \ldots, \theta_{M-1}^{(0)}\}$

**Output:** $\hat{f}, \hat{\theta}$

1: **for** $m = 0, 1, \ldots M\text{-}1$ **do**

2:　　$L_m^{best} \leftarrow \infty$, $f_m^{best} \leftarrow f_m^{(0)}$, $\theta_m^{best} \leftarrow \theta_m^{(0)}$

3:　　$k \leftarrow 0$

4:　　**while** converged = false **do**

5:　　　　compute $\mathbf{Q}\,(f_m^{(k)})$

6:　　　　$\hat{x}_m^{(k)}, L^V\,(f_m^{(k)}, \theta_m^{(k)}) \leftarrow$ UnwrapViterbi(y, $f_m^{(k)}, \theta_m^{(k)}$)

7:　　　　**if** $L^V\,(f_m^{(k)}, \theta_m^{(k)}) < L_m^{best}$ **then**

8:　　　　　　$L_m^{best} \leftarrow L^V\,(f_m^{(k)}, \theta_m^{(k)})$

9:　　　　　　$f_m^{best} \leftarrow f_m^{(k)}, \theta_m^{(k)} \leftarrow \theta_m^{(k)}$

10:　　　　　　$f_m^{(k+1)}, \theta_m^{(k+1)} \leftarrow$ GLS $(\hat{x}_m^{(k)}, \mathbf{Q}\,(f_m^{(k)}))$

11:　　　　　　$k \leftarrow k\text{+}1$

12:　　　　**else**

13:　　　　　　$\hat{f}_m \leftarrow f_m^{best}, \hat{\theta}_m \leftarrow \theta_m^{best}$

14:　　　　　　converged = true

15: $\tilde{m} = \arg min_m\ L_m^{best}$

16: $\hat{f} \leftarrow \hat{f}_{\tilde{m}}, \hat{\theta} \leftarrow \hat{\theta}_{\tilde{m}}$

## FIG.6

**606**

Phase noise statistics

**602**

Measured
interference signal

| 0.25 | |
| 0.00 | |
| −0.25 | |

0    1    2    3
time (s)                1e−8

Phase
extraction

**604**

Wrapped phase

π

0

−π

0    1    2    3
time (s)                1e−8

Fourier
transform

**608**

Power Spectral Density

power density (dB/Hz)

0

−50

0.0  0.2  0.4  0.6  0.8  1.0
frequency (Hz)           1e9

— received
-- true

**610**

initial frequency estimate

Frequency estimation
algorithm 612

Phase
unwrapping 614

Linear regression
616

Final frequency
estimate

**618**

# FIG.7A

**Step 1**: predict the phase error at sample time $t_n$ given the existing survivor paths

**Step 2**: for each existing survivor, select the $K$ most likely unwrapping values $u_n$ and compute the possible path lengths

$K$ current survivors with path likelihoods $L_{n-1}^{(1)}, ..., L_{n-1}^{(K)}$

$K$ most probable unwrapping values for each path (maximum of $K^2$ branches overall)

LMMSE estimates for each path

Line estimate $(\hat{f} t_n + \hat{\theta})$

Possible values for unwrapped phase $x_n = y_n + u_n$

sample time $t_{n-1}$

sample time $t_n$

time

time

# FIG.7B

**Step 2**: for each existing survivor, select the $K$ most likely unwrapping values $u_n$ and compute the possible path lengths

**Step 3**: of the possible paths, retain the $K$ survivors with the shortest path lengths

$K$ most probable unwrapping values for each path (maximum of $K^2$ branches overall)

$K$ surviving paths with likelihoods $L_n^{(1)}, ..., L_n^{(K)}$

Select $u_n$s that yield $K$ shortest path lengths

$$L_{n-1}^{(k)} - \log\left(p\left(y_n \middle| u_n, y_{n-c}^{n-1}, u_{n-c}^{n-1}, \hat{f}, \hat{\theta}\right)\right)$$

FIG.7C

Linear forward model:

$$\begin{bmatrix} y_1 \\ \vdots \\ y_N \end{bmatrix} + \begin{bmatrix} \hat{u}_1 \\ \vdots \\ \hat{u}_N \end{bmatrix} = \begin{bmatrix} t_1 & 1 \\ \vdots & \vdots \\ t_N & 1 \end{bmatrix} \begin{bmatrix} f \\ \theta \end{bmatrix} + \begin{bmatrix} \xi_1 \\ \vdots \\ \xi_N \end{bmatrix}$$

$$\underbrace{\phantom{xxxxx}}_{x} \quad \underbrace{\phantom{xxxx}}_{A} \underbrace{\phantom{x}}_{\beta} \underbrace{\phantom{x}}_{\xi}$$

Generalized least-squares linear regression:

$$\begin{bmatrix} \hat{f} \\ \hat{\theta} \end{bmatrix} = \left( \begin{bmatrix} t_1 & \cdots & t_N \\ 1 & \cdots & 1 \end{bmatrix} \begin{bmatrix} Q_{1,1}^{-1}, & \cdots & Q_{1,N}^{-1} \\ \vdots & \ddots & \vdots \\ Q_{N,1}^{-1} & \cdots & Q_{N,N}^{-1} \end{bmatrix} \begin{bmatrix} t_1 & 1 \\ \vdots & \vdots \\ t_N & 1 \end{bmatrix} \right)^{-1} \begin{bmatrix} t_1 & \cdots & t_N \\ 1 & \cdots & 1 \end{bmatrix} \begin{bmatrix} Q_{1,1}^{-1}, & \cdots & Q_{1,N}^{-1} \\ \vdots & \ddots & \vdots \\ Q_{N,1}^{-1} & \cdots & Q_{N,N}^{-1} \end{bmatrix} \begin{bmatrix} \hat{x}_1 \\ \vdots \\ \hat{x}_N \end{bmatrix}$$

$$\underbrace{\phantom{x}}_{\hat{\beta}^{\mathrm{GLS}}} \quad \underbrace{\phantom{xx}}_{A^{\mathrm{T}}} \underbrace{\phantom{xxxx}}_{Q_N^{-1}} \underbrace{\phantom{xx}}_{A} \quad \underbrace{\phantom{xx}}_{A^{\mathrm{T}}} \underbrace{\phantom{xxxx}}_{Q_N^{-1}} \underbrace{\phantom{x}}_{\hat{x}}$$

EP 4 460 711 B1

38

FIG.8

Transmitted beam

Reflected beam

**FIG.9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113740834 A

**Non-patent literature cited in the description**

- Compensating For Point Response Degradation In A High Resolution FMCW Imaging Radar. **CASSIDY SL**. 2019 20TH INTERNATIONAL RADAR SYMPOSIUM (IRS). GERMAN INSTITUTE OF NAVIGATION (DGON), 26 June 2019, 1-8

- Development and Demonstration of MIMO-SAR mmWave Imaging Testbeds. **YANIK MUHAMMET EMIN et al.** IEEE ACCESS. IEEE, 08 July 2020, vol. 8, 126019-126038